# EUROPEAN PATENT APPLICATION

(11) **EP 3 944 698 A1**
(43) Date of publication of application: **26.01.2022**
(21) Application number: 19920392.8
(22) Date of filing: 20.03.2019
(51) Int. Cl.: H04W 72/12, H04W 16/28, H04W 72/04

(54) **USER TERMINAL AND WIRELESS COMMUNICATION METHOD**

(71) Applicant: NTT DOCOMO, INC., Chiyoda-Ku Tokyo 100-6150 (JP)
(72) Inventor: MATSUMURA, Yuki, Tokyo 100-6150 (JP); NAGATA, Satoshi, Tokyo 100-6150 (JP); WANG, Jing, Beijing 100190 (CN); GUO, Shaozhen, Beijing 100190 (CN); HOU, Xiaolin, Beijing 100190 (CN)
(74) Representative: Hoffmann Eitle
(86) International application number: PCT/JP2019/011904
(87) International publication number: WO 2020/188821

(57) **Abstract**

A user terminal includes: a reception section that receives instructions of a plurality of uplink signals using a plurality of panels; and a control section that transmits one first uplink signal based on the plurality of uplink signals by using one first panel among the plurality of panels in a period when there is the period in which the plurality of uplink signals overlaps with each other in a case where transmission is not performed by using the plurality of panels simultaneously. According to one aspect of the present disclosure, a user terminal communicating with a plurality of transmission/reception points can appropriately transmit a UL signal.

## Description

### Technical Field

The present disclosure relates to a user terminal and a radio communication method in a next-generation mobile communication system.

### Background Art

In a universal mobile telecommunications system (UMTS) network, specifications of long term evolution (LTE) have been drafted for the purpose of further increasing a data rate, providing low latency, and the like (see Non Patent Literature 1). Further, the specifications of LTE-Advanced (third generation partnership project (3GPP) Release. (Rel.) 10 to 14) have been drafted for the purpose of further increasing capacity and advancement of LTE (3GPP Rel. 8 and 9).

LTE's successor systems (for example, also referred to as 5th generation mobile communication system (5G), 5G plus (+), New Radio (NR), or 3GPP Rel. 15 or later) have also been studied.

In the existing LTE system (for example, LTE Rel. 8-14), a user terminal (user equipment (UE)) controls reception of a downlink shared channel (for example, a physical downlink shared channel (PDSCH)) on the basis of downlink control information (DCI) (also referred to as DL assignment or the like) transmitted via a downlink control channel (for example, a physical downlink control channel (PDCCH)). Further, the user terminal controls transmission of an uplink shared channel (for example, physical uplink shared channel (PUSCH)) on the basis of the DCI (also referred to as UL grant or the like).

### Citation List

### Non Patent Literature

Non Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April 2010

### Summary of Invention

### Technical Problem

It has been studied that a user terminal communicates with a plurality of transmission/reception points (a plurality of panels) in a future radio communication system (for example, NR).

However, an operation is not clear when a plurality of UL signals for a plurality of transmission/reception points collide with each other. If such an operation is not clear, system performance may degrade.

Thus, an object of the present disclosure is to provide a user terminal and a radio communication method in which a user terminal communicating with a plurality of transmission/reception points appropriately transmits a UL signal.

### Solution to Problem

A user terminal according to one aspect of the present disclosure includes: a reception section that receives instructions of a plurality of uplink signals using a plurality of panels; and a control section that transmits one first uplink signal based on the plurality of uplink signals by using one first panel among the plurality of panels in a period when there is the period in which the plurality of uplink signals overlaps with each other in a case where transmission is not performed by using the plurality of panels simultaneously.

### Advantageous Effects of Invention

According to one aspect of the present disclosure, a user terminal communicating with a plurality of transmission/reception points can appropriately transmit a UL signal.

### Brief Description of Drawings

Figs. 1A to 1D are diagrams illustrating an example of an operation when a PUCCH and a PUSCH collide with each other in one serving cell.
Figs. 2A and 2B are diagrams illustrating an example of an operation when a PUCCH and a PUSCH collide with each other in a plurality of serving cells.
Figs. 3A to 3C are diagrams illustrating an example of an operation when a PUCCH and an SRS collide with each other.
Fig. 4 is a diagram illustrating an example of collision of a plurality of UL signals with a plurality of TRPs.
Figs. 5A and 5B are diagrams illustrating an example of symbol level processing.
Figs. 6A and 6B are diagrams illustrating an example of slot level processing.
Fig. 7 is a diagram illustrating an example of multi-slot level processing.
Fig. 8 is a diagram illustrating an example of transmission of DCI.
Figs. 9A and 9B are diagrams illustrating an example of TRP determination based on a CORESET.
Figs. 10A and 10B are diagrams illustrating an example of TRP determination based on a sequence ID.
Fig. 11 is a diagram illustrating an example of a schematic configuration of a radio communication system according to one embodiment.
Fig. 12 is a diagram illustrating an example of a configuration of a base station according to one embodiment.
Fig. 13 is a diagram illustrating an example of a configuration of a user terminal according to one embodiment.
Fig. 14 is a diagram illustrating an example of a hardware configuration of a base station and a user terminal according to one embodiment.

### Description of Embodiments

### (Processing in Case of UL Signal Collision)

In Rel. 15 NR, a rule is defined of multiplexing or dropping of UCI when the UCI collides with a PUSCH in the same symbol.

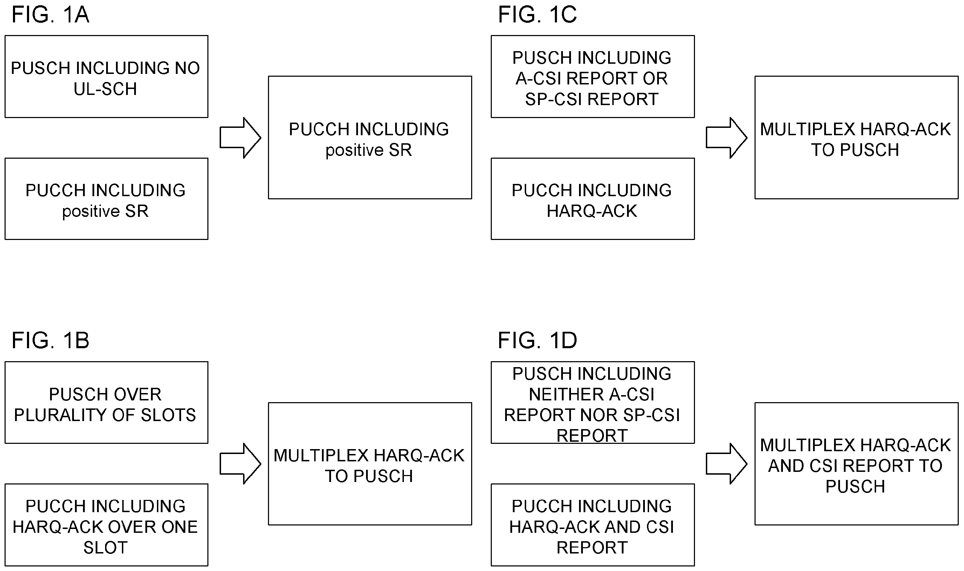

Figs. 1A to 1D are diagrams illustrating an example of an operation when a PUCCH and a PUSCH collide with each other in one serving cell.

As illustrated in Fig. 1A, when a PUSCH having no UL-shared channel (SCH) collides with a positive scheduling request (positive SR), a UE may drop the PUSCH and transmit only a PUCCH including the positive SR.

As illustrated in Fig. 1B, when a PUSCH over a plurality of slots and a PUCCH including a HARQ-ACK over a single slot collide with each other, the UE may multiplex the HARQ-ACK to the PUSCH.

As illustrated in Fig. 1C, when a PUSCH including an aperiodic CSI (AP-CSI) report or a semi-persistent CSI (SP-CSI) report collides with a PUCCH including a HARQ-ACK, the UE may multiplex the HARQ-ACK into the PUSCH.

As illustrated in Fig. 1D, when a PUSCH including neither an AP-CSI report nor an SP-CSI report collides with a PUCCH including a HARQ-ACK and a CSI report, the UE may multiplex the HARQ-ACK and the CSI report on the PUSCH.

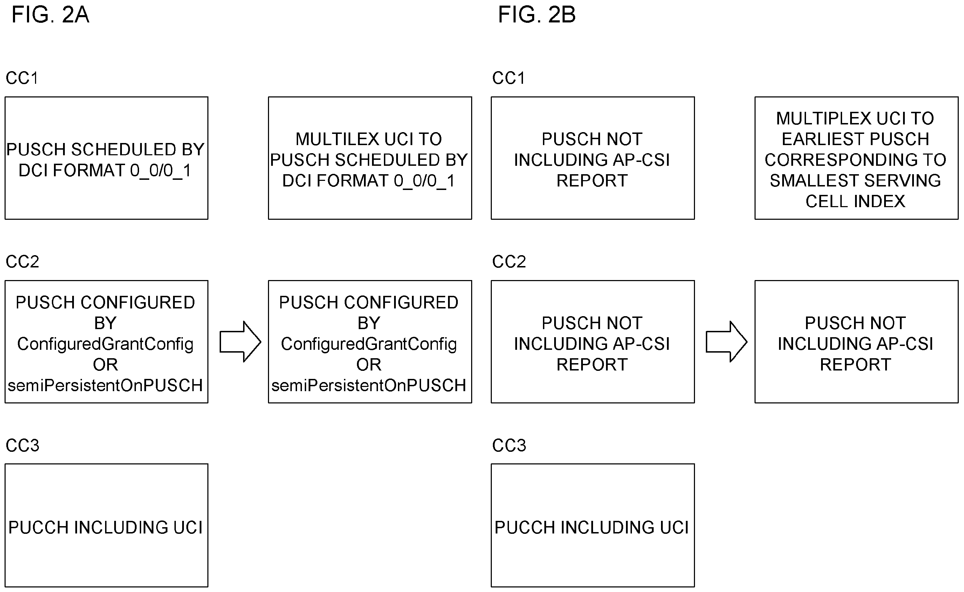

Figs. 2A and 2B are diagrams illustrating an example of an operation when a PUCCH and a PUSCH collide with each other in a plurality of serving cells.

As illustrated in Fig. 2A, when a PUSCH scheduled by the DCI format 0_0 or 0_1 in CC1, a PUSCH configured by configured grant configuration information (for example, an RRC information element ConfiguredGrantConfig) or semi-persistent information on a PUSCH (for example, an RRC information element semiPersistentOnPUSCH) in CC2, and a PUCCH including UCI in CC3 collide with each other, the UE may multiplex the UCI to the PUSCH scheduled by the DCI format 0_0 or 0_1 in CC1 and transmits them, and transmit the PUSCH configured by the configured grant configuration information or the semi-persistent information on the PUSCH in CC2.

As illustrated in Fig. 2B, when a PUSCH not including an AP-CSI report in CC1, a PUSCH not including an AP-CSI report in CC2, and a PUCCH including UCI in CC3 collide with each other, the UE may multiplex the UCI to the earliest PUSCH (in CC1) having the smallest serving cell index (for example, ServCellIndex) and transmit them, transmit a PUSCH configured by configured grant configuration information or semi-persistent information on a PUSCH in CC2, and transmit other PUSCHs (a PUSCH other than the first PUSCH in CC1 and a PUSCH in CC2).

Further, in Rel. 15 NR, the priority of the SRS is defined in the sounding procedure by the UE.

When transmitting a PUSCH and an SRS in the same slot, the UE may be configured only to transmit the SRS after transmitting the PUSCH and a corresponding DM-RS.

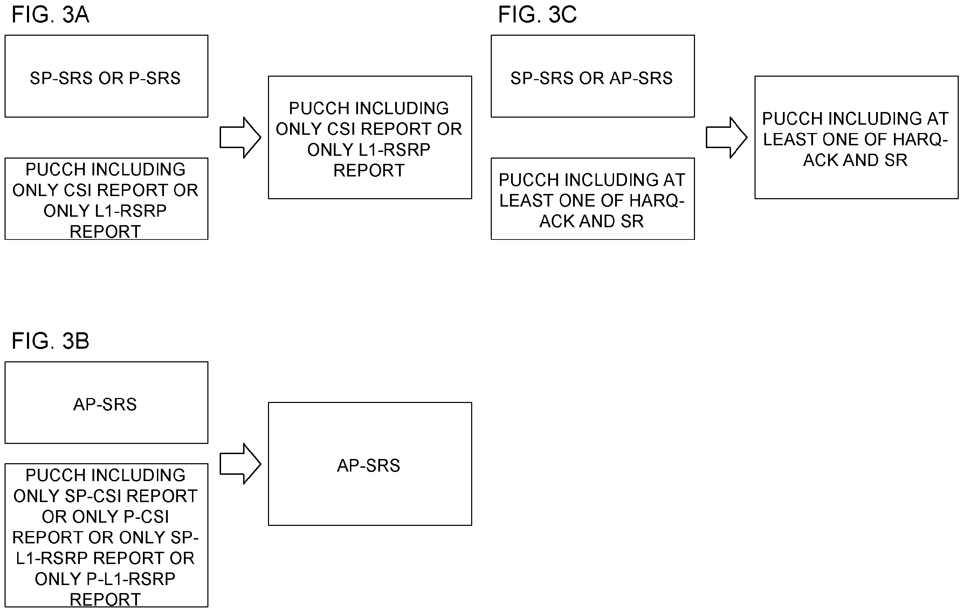

Figs. 3A to 3C are diagrams illustrating an example of an operation when a PUCCH and an SRS collide with each other.

As illustrated in Fig. 3A, when a semi-persistent SRS (SP-SRS) or a periodic SRS (P-SRS) collides with a PUCCH including only a CSI report or only a Layer 1 (L1)-Reference Signal Received Power (RSRP) report, the UE may drop the SP-SRS or the P-SRS and transmit only the PUCCH.

As illustrated in Fig. 3B, when the aperiodic SRS (AP-SRS) collides with a PUCCH including only an SP-CSI report, a periodic CSI (P-CSI) report, a semi-persistent L1-RSRP (SP-L1-RSRP) report, or a periodic L1-RSRP (P-L1-RSRP) report collide, the UE may drop the PUCCH and transmit only the AP-SRS.

As illustrated in Fig. 3C, when an SP-SRS or an AP-SRS collides with a PUCCH including at least one of a HARQ-ACK and an SR (positive SR or negative SR), the UE may drop the SP-SRS or the AP-SRS and transmit only the PUCCH.

Further, in Rel. 15 NR, priorities are defined for different CSI report contents.

A CSI report may be associated with a priority (priority order) value Pri_{iCSI}(y, k, c, s) = 2•N_{cells}•Mₛ•y + N_{cells}•Mₛ•k + Mₛ • c + s.

The y may be 0 for an AP-CSI report carried on a PUSCH. The y may be 1 for an SP-CSI report carried on a PUSCH. The y may be 2 for an SP-CSI report carried on a PUCCH. The y may be 3 for a P-CSI report carried on a PUCCH.

The k may be 0 for a CSI report carrying an L1-RSRP. The k may be 1 for a CSI report not carrying an L1-RSRP.

The c may be a serving cell index. The N_{cells} may be the number of serving cells (for example, a value of a higher layer parameter maxNrofServingCells).

The s may be a report configuration ID (for example, reportConfigID). The Mₛ may be the number of CSI report configurations (for example, a higher layer parameter maxNrofCSI-ReportConfigurations) .

When a Pri_{iCSI}(y, k, c, s) value associated with the first CSI report is lower than a Pri_{iCSI}(y, k, c, s) value associated with the second CSI report, it may be paraphrased that the first CSI report has a priority exceeding the second CSI report, or the first CSI report is prioritized more than the second CSI report.

In the present disclosure, processing such as dropping, multiplexing, limitation, or the like of a UL signal when a plurality of UL signals collide with each other is referred to as collision processing, and a rule (for example, Figs. 1 to 3) for determining the collision processing on the basis of a type of the UL signal is referred to as a collision processing rule.

In the present disclosure, the type of the UL signal may be represented by at least one of a type of the channel/signal (for example, PUCCH, PUSCH, SRS, or the like), a type of information (for example, UCI type, HARQ-ACK, SR, CSI report, or the like) carried on the channel, a type of the CSI report (P-CSI report, SP-CSI report, AP-CSI report), a type of the SRS (P-SRS, SP-SRS, AP-SRS, or the like), a priority of the CSI report, and presence or absence of the UL-SCH.

### (Multi-TRP)

In NR, it has been studied that one or a plurality of transmission/reception points (TRPs) (multi-TRP) performs at least one of DL transmission and UL reception by using one or a plurality of panels (multi-panel).

Further, in the present disclosure, a TRP, a transmission point, a reception point, a base station panel, a reception panel, a panel, an antenna panel, a plurality of antenna elements, an antenna port, a demodulation reference signal (DMRS) port, and a cell may be replaced with each other. The TRP can be replaced with a beam, a spatial filter, a reference signal (RS), a DMRS port, an antenna port, quasi-co-location (QCL), a transmission configuration indication (TCI), or a concept (for example, an RS group, a DMRS port group, an antenna port group, or the like) obtained by grouping them.

The UE may be configured by higher layer signaling (configuration information) for a communication using the multi-TRP. For communication using a plurality of TRPs,
the UE may be notified of information (at least one of higher layer signaling and DCI) indicating allocation of a plurality of resources respectively corresponding to the plurality of TRPs.

The plurality of TRPs may belong to a synchronous network, or may belong to an asynchronous network. Further, the plurality of TRPs may be connected to each other via ideal backhaul, or may be connected to each other via non-ideal backhaul.

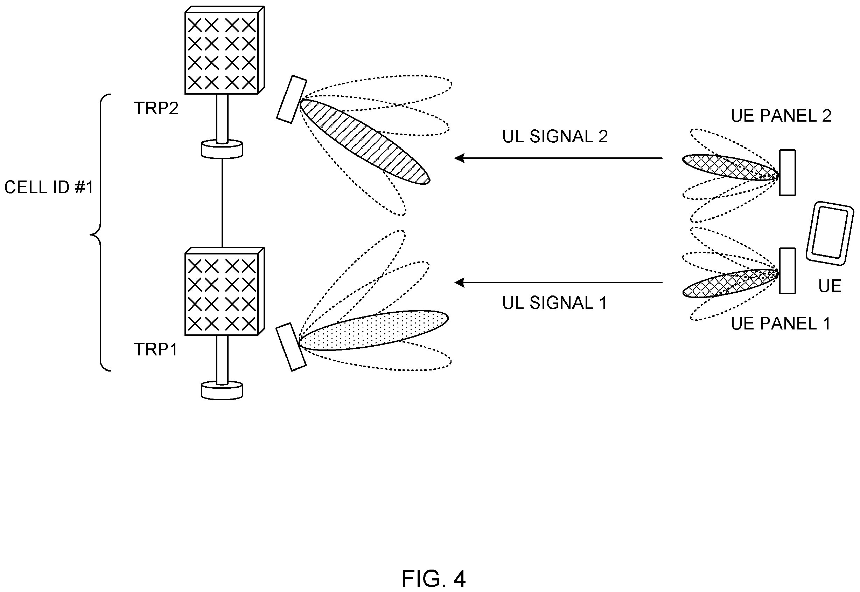

Fig. 4 is a diagram illustrating an example of collision of a plurality of UL signals with a plurality of TRPs.

A TRP may be capable of transmitting and receiving a plurality of different beams. One TRP may include one base station panel, or may include a plurality of base station panels. The UE may send a UL signal to one TRP by using one UE panel, or may send UL signals to a plurality of TRPs by using a plurality of UE panels. One UE panel may be associated with one TRP. The plurality of UE panels may be associated with the plurality of TRPs.

In the present disclosure, the UE panel, the transmission panel, the antenna panel, the plurality of antenna elements, the antenna port, the DMRS port, the TRP, and a transmission destination may be replaced with each other. The UE panel may be replaced with a beam, a spatial filter, an RS, a DMRS port, an antenna port, a QCL, a TCI, spatial relation information, or a concept (for example, an RS group, a DMRS port group, or an antenna port group.) obtained by grouping them.

In the present disclosure, the UL signal, the UL channel, the PUCCH, the PUSCH, the sounding reference signal (SRS), the PUSCH DMRS, and the PUCCH DMRS may be replaced with each other.

The plurality of UL signals respectively corresponding to the plurality of TRPs may be assumed not to be in a quasi-co-location (QCL) relationship (not quasi-co-located) .

Independent hybrid automatic repeat request acknowledgement (HARQ-ACK, positive acknowledgement (ACK)/negative acknowledgement (NACK), A/N) feedback may be transmitted to the plurality of TRPs. For different TRPs, independent PUSCHs may be scheduled by independent pieces of DCI.

It is also conceivable that the UE cannot simultaneously transmit two UL signals to the plurality of TRPs through different UE panels depending on UE capability.

The UE may report UE capability information indicating whether or not to support UL simultaneous transmission using the plurality of UE panels. The UE may be configured to perform UL simultaneous transmission using the plurality of UE panels.

However, in a case where the UE does not perform transmission by using the plurality of UE panels simultaneously, when the plurality of UL signals using the different UE panels collide with each other in the time domain, how to handle the UL signals becomes a problem.

Thus, the present inventors have conceived a method of UL transmission when the plurality of UL signals using the different UE panels collide with each other in the time domain in the case where the UE does not perform the UL transmission using the plurality of UE panels simultaneously.

Hereinafter, embodiments according to the present disclosure will be described in detail with reference to the drawings. The following embodiments may each be applied alone, or may be applied in combination.

In the present disclosure, the higher layer signaling may be any of, for example, radio resource control (RRC) signaling, medium access control (MAC) signaling, broadcast information, and the like, or a combination thereof.

For example, a MAC control element (MAC CE), a MAC protocol data unit (PDU), or the like may be used for the MAC signaling. The broadcast information may be, for example, a master information block (MIB), a system information block (SIB), remaining minimum system information (RMSI), other system information (OSI), and the like.

In the present disclosure, a TRP, a transmission point, a DMRS port group, a MIMO layer, a panel, a cell, a carrier, a component carrier (CC), a PDSCH, a codeword, a base station, and the like may be replaced with each other.

Multiple TRP transmission may be replaced with multi-panel transmission, multi-panel TRP transmission, reception of multiple PDSCHs from different TRPs, reception of multiple PDSCHs corresponding to different DMRS port groups, a case where multiple DMRS port groups are configured, a case where at least some of resources of the multiple PDSCH overlap with each other, and the like.

Note that in the present embodiment, a TRP, a panel, an uplink (UL) transmission entity, a demodulation reference signal (DMRS) antenna port (DMRS port), a group of DMRS ports (DMRS ports), a group of DMRS ports (CDM group) to be subjected to code division multiplexing (CDM), a control resource set (CORESET), a search space set, a PDSCH, a codeword, a base station, and the like may be replaced with each other.

Further, a panel identifier (ID) and a panel may be replaced with each other. A TRP ID and a TRP may be replaced with each other. Further, a cell ID, a serving cell ID, a serving cell index, a carrier index, a CC index, and a carrier identifier may be replaced with each other. Further, an ID, an index, and a number may be replaced with each other.

In the present disclosure, a UL signal, a UL channel, a reference signal (RS), a PUSCH, a PUCCH, an SRS, a PUSCH DMRS, and a PUCCH DMRS may be replaced with each other.

### (Radio Communication Method)

In a case where the UE does not perform transmission by using a plurality of UE panels simultaneously, when there is a period in which a plurality of UL signals for the plurality of UE panels overlaps with each other, the UE may transmit one specific UL signal (first uplink signal) based on the plurality of UL signals in the period by using one specific UE panel (first panel) in the plurality of UE panels.

In the present disclosure, that the UE does not perform transmission by using a plurality of UE panels simultaneously, that the UE does not perform transmission to a plurality of TRPs simultaneously, that the UE does not have a capability of UL transmission by using a plurality of UE panels simultaneously, that the UE does not report capability information of UL transmission by using a plurality of UE panels simultaneously, that the UE does not include a plurality of UE panels, that the UE is not configured to perform UL transmission by using a plurality of UE panels simultaneously, and that the UE is configured not to perform UL transmission by using a plurality of UE panels simultaneously may be replaced with each other.

Each TRP may be associated with one UE panel. Each TRP may be associated with one beam. In a case where the UE does not perform transmission to a plurality of TRPs simultaneously, when there is a period in which a plurality of UL signals for the plurality of TRPs overlaps with each other, the UE may transmit one specific UL signal (first uplink signal) based on the plurality of UL signals in the period to one specific TRP (first TRP) among the plurality of TRPs.

The one specific UL signal based on the plurality of UL signals may be a selected UL signal, or may be a UL signal obtained by multiplexing another UL signal (at least a part of information included in another UL signal) with the selected UL signal.

### < First Embodiment >

For multiple TRPs, when the UE is instructed (configured) to transmit one or more UL signals to one TRP and transmit one or more UL signals to other TRPs that temporally overlap with the UL signals, and the UE does not perform simultaneous UL transmission via different UE panels, the UE may determine one specific TRP that is an actual destination (step 1-1) and determine one specific UL signal to be actually transmitted (step 1-2). The UE may determine one specific UE panel to be used for actual transmission instead of the specific TRP.

Step 1-1: The UE may determine (select) a specific TRP on the basis of a rule defined in advance. The UE may thereby determine the specific TRP from a set plurality of TRPs.

In step 1-1, the UE may follow at least one of the following TRP determination methods 1 and 2.

TRP determination method 1: The UE may determine a priority of the TRP on the basis of a type of a UL signal corresponding to each TRP.

TRP determination method 2: The UE may determine a priority of the TRP on the basis of a TRP determination rule. The UE may determine a priority of each TRP on the basis of a combination of the TRP determination method 1 and the TRP determination method 2. This TRP determination rule may be at least one of the following TRP determination rules 1 to 5.

TRP determination rule 1: The UE may select a TRP corresponding to an earlier start time of the UL signal.

TRP determination rule 2: The UE may select a TRP corresponding to a lowest TRP ID (may be a panel ID, a DMRS port group ID, a CORESET ID, or another ID).

TRP determination rule 3: The UE may select a TRP corresponding to a higher channel state (for example, RSRP, CSI, or the like).

TRP determination rule 4: The UE may select a TRP corresponding to a larger UL signal size or a lower UL transmit power.

TRP determination rule 5: The UE may select a TRP depending on UE implementation.

TRP determination rule 6: The UE may select a TRP on the basis of DCI that schedules (triggers) a corresponding UL signal (fourth embodiment).

Step 1-2: When there is a plurality of UL signals to be transmitted on the same symbol for the determined one TRP, the TRP may be determined (selected) by reusing or applying a Rel. 15 collision processing rule (dropping, multiplexing, limitation, or the like) for one serving cell.

When there is a plurality of serving cells (when CA or DC is used), the UE may apply a Rel. 15 collision processing rule for the plurality of serving cells after selecting a TRP for each serving cell (CC) by step 1-1.

Details will be described of the TRP determination method 1.

In the TRP determination method 1, when a UL signal for one TRP temporally overlaps with UL signals for other TRPs, the UE may select a specific TRP on the basis of the type of the UL signal corresponding to each TRP.

The UE may determine a priority of each TRP in accordance with any of the following priority determination methods 1-1 and 1-2.

Priority determination method 1-1: The priority may be defined in accordance with the following order. PUCCH including positive SR > PUCCH including HARQ-ACK > AP-SRS > PUSCH including AP-CSI report > PUSCH including SP-CSI report > PUCCH including SP-CSI report > PUCCH including P-CSI report > SP-SRS > P-SRS > UL-SCH-only PUSCH

Here, priorities for different CSI report contents follow the priority Pri_{iCSI} (y, k, c, s) of Rel. 15 described above.

Priority determination method 1-2: A part (for example, priority regarding SRS) of the priority determination method 1-1 may be reviewed as in at least one of the following priority determination methods 1-2-1 to 1-2-4.

Priority determination method 1-2-1: ... > PUCCH including HARQ-ACK > PUSCH including AP-CSI report > PUSCH including SP-CSI report > AP-SRS > PUCCH including SP-CSI report > PUCCH including P-CSI report > SP-SRS > P-SRS > UL-SCH-only PUSCH

Priority determination method 1-2-2: ... > PUCCH including HARQ-ACK > AP-SRS > PUSCH including AP-CSI report > PUSCH including SP-CSI report > PUCCH including SP-CSI report > PUCCH including P-CSI report > UL-SCH-only PUSCH > SP-SRS > P-SRS

Priority determination method 1-2-3: ... > PUCCH including HARQ-ACK > AP-SRS > PUSCH including AP-CSI report > PUSCH including SP-CSI report > PUCCH including SP-CSI report > PUCCH including P-CSI report > SP-SRS > UL-SCH-only PUSCH > P-SRS

Priority determination method 1-2-4: combination of priority determination method 1-2-1 and priority determination method 1-2-2 or 1-2-3

According to the TRP determination method 1, when two overlapping UL signals for two TRPs are of the same type and have the same priority, the UE may apply the TRP determination method 2.

When one or more UL signals for one TRP overlap with a plurality of UL signals for other TRPs, the UE may determine the specific TRP on the basis of any of the priority determination methods 1-1 and 1-2.

The UE may first compare the first (highest) priorities of the UL signals in respective TRPs to determine the specific TRP.

When the xth priorities (for example, the first priorities) of UL signals in respective TRPs are the same as each other, the UE may determine the specific TRP in accordance with at least one of the following selection methods 1 and 2.

Selection method 1: The UE may compare next priorities (for example, the second priorities) of the UL signals in respective TRPs. Here, when one TRP has the next priority, but the other TRPs do not have other UL signals to be transmitted, the UE may select a TRP having more UL signals as the specific TRP.

Selection method 2: The UE may apply the TRP determination method 2.

According to this first embodiment, the UE may preferentially select a TRP. For example, a TRP set in advance can be preferentially selected. For example, a master TRP is set in advance and the master TRP is preferentially selected, whereby the master TRP can receive a good CSI report and improve communication quality of the master TRP.

### < Second Embodiment >

For multiple TRPs, when the UE is instructed (configured) to transmit one or more UL signals to one TRP and to transmit one or more UL signals to other TRPs that temporally overlap with the UL signals, and the UE does not perform UL simultaneous transmission via different UE panels, the UE may determine one UL signal for each TRP (step 2-1) and determine one specific TRP to be an actual destination (step 2-2). The UE may determine one specific UE panel to be used for actual transmission instead of the specific TRP. The UE may determine a UL signal corresponding to the specific TRP among the UL signals determined in step 2-1 as a specific UL signal.

Step 2-1: There is a plurality of UL signals to be transmitted in the same symbol for each TRP, and the UE may apply a Rel. 15 collision processing rule in one serving cell to each TRP. The UE may thereby determine one UL signal for each of the multiple TRPs.

Step 2-2: The UE may determine (select) a specific TRP on the basis of a TRP determination rule defined in advance.

In step 2-2, the UE may follow at least one of the following TRP determination methods 3 and 4.

TRP determination method 3: The UE may determine a priority of the TRP on the basis of a type of a UL signal, similarly to the TRP determination method 1. Here, the TRP determination method 3 may be different from the TRP determination method 1 in that multiplexing is performed in each TRP.

TRP determination method 4: The UE may determine a priority of each TRP on the basis of a TRP determination rule similar to the TRP determination method 2.

In the TRP determination method 3, the UE may determine a specific TRP in accordance with any of the following priority determination methods 2-1, 2-2, and 2-3.

Priority determination method 2-1: The priority may be defined in accordance with the following order. PUCCH including positive SR > PUSCH including HARQ-ACK > PUCCH including HARQ-ACK > AP-SRS > PUSCH including AP-CSI report > PUSCH including SP-CSI report > PUCCH including SP-CSI report > PUCCH including P-CSI report > SP-SRS > P-SRS > UL-SCH-only PUSCH

Priority determination method 2-2: The priority may be defined in accordance with the following order. PUSCH including HARQ-ACK > PUCCH including positive SR > PUCCH including HARQ-ACK > AP-SRS > PUSCH including AP-CSI report > PUSCH including SP-CSI report > PUCCH including SP-CSI report > PUCCH including P-CSI report > SP-SRS > P-SRS > UL-SCH-only PUSCH

Priority determination method 2-3: A part (for example, priority regarding SRS) of the priority determination method 2-1 or 2-2 may be reviewed as in at least one of the following priority determination methods 2-3-1 to 2-3-4.

Priority determination method 2-3-1: ... > PUCCH including HARQ-ACK > PUSCH including AP-CSI report > PUSCH including SP-CSI report > AP-SRS > PUCCH including SP-CSI report > PUCCH including P-CSI report > SP-SRS > P-SRS > UL-SCH-only PUSCH

Priority determination method 2-3-2: ... > PUCCH including HARQ-ACK > AP-SRS > PUSCH including AP-CSI report > PUSCH including SP-CSI report > PUCCH including SP-CSI report > PUCCH including P-CSI report > UL-SCH-only PUSCH > SP-SRS > P-SRS

Priority determination method 2-3-3: ... > PUCCH including HARQ-ACK > AP-SRS > PUSCH including AP-CSI report > PUSCH including SP-CSI report > PUCCH including SP-CSI report > PUCCH including P-CSI report > SP-SRS > UL-SCH-only PUSCH > P-SRS

Priority determination method 2-3-4: combination of priority determination method 2-3-1 and priority determination method 2-2-2 or 1-3-3

When priorities of two UL signals corresponding to two TRPs are the same as each other, the UE may determine the specific TRP similarly to the first embodiment, or may use at least one of the selection methods 1 and 2 in the first embodiment.

### << Modification >>

When the UE is configured to transmit a plurality of UL signals of different types to a plurality of TRPs, the UE may determine one specific UL signal on the basis of a Rel. 15 collision processing rule.

When the UE is configured to transmit a plurality of UL signals of the same type to a plurality of TRPs, the UE may determine the specific TRP by step 1-1 in the first embodiment.

According to this second embodiment, the UE can preferentially select a UL signal. For example, a UL signal of a given type can be selected. Regardless of the TRP, by selecting the UL signal, a load can be distributed to a plurality of TRPs.

### < Third Embodiment >

Processing on a plurality of TRPs (a plurality of UL signals) in the first and second embodiments may be at a symbol level, a slot level, or a multi-slot level. The collision may be a case where at least one symbol of the plurality of UL signals overlaps or a case where one symbol of the plurality of UL signals overlaps.

The UE may perform at least one of the following symbol level processing, slot level processing, and multi-slot level processing on the plurality of UL signals in the first and second embodiments.

### << Symbol Level Processing >>

When one symbol of the plurality of UL signals overlaps, the UE may determine the TRP and UL signal for UL transmission in units of overlapping symbols.

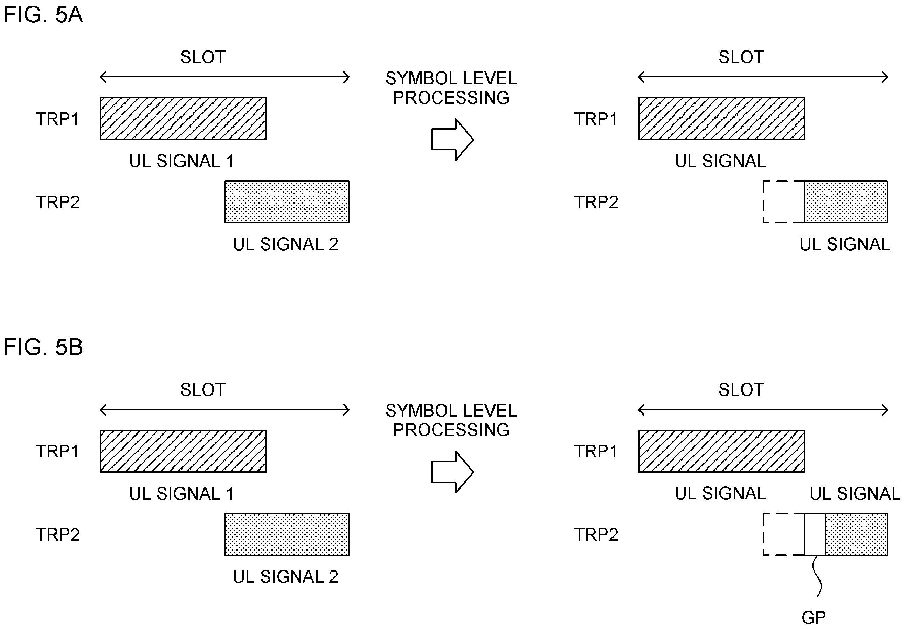

As illustrated in Fig. 5A, in a UL signal 1 for a TRP 1 and a UL signal 2 for a TRP 2 in one slot, when the UL signal 2 overlaps with the UL signal 1 in at least one symbol, and the UE selects the TRP 1 as a specific TRP (selects the UL signal 1 as a specific UL signal), the UE may drop a signal of a symbol overlapping with the UL signal 1 in the UL signals 2 that is not selected and transmit a signal of a remaining symbol, or on the basis of the collision processing rule, may multiplex the signal of the symbol overlapping with the UL signal 1 in the UL signal 2 that is not selected into the UL signal 1 and transmit the signal of the remaining symbol.

As illustrated in Fig. 5B, in the UL signal 1 for the TRP 1 and the UL signal 2 for the TRP 2 in one slot, when the UL signal 2 overlaps with the UL signal 1 in at least one symbol, and the UE selects the TRP 1 as the specific TRP (selects the UL signal 1 as the specific UL signal), the UE may drop a signal of a symbol overlapping with UL signal 1 in the UL signal 2 that is not selected and a signal of a subsequent guard period (GP) and transmit the signal of the remaining symbol, or on the basis of the collision processing rule, may multiplex the signal of the symbol overlapping with the UL signal 1 in the UL signal 2 that is not selected and the signal of the subsequent guard period into the UL signal 1 and transmit the signal of the remaining symbol.

The UE may be configured to have a guard period (guard period time length (duration)) of X symbols. The guard period time length X may be determined on the basis of the UE capability.

A UL signal (for example, the UL signal 2) partially transmitted by the symbol level processing may be, for example, an SRS.

### << Slot Level Processing >>

When at least one symbol of the plurality of UL signals overlaps, the UE may determine the TRP and UL signal for UL transmission in units of overlapping slots.

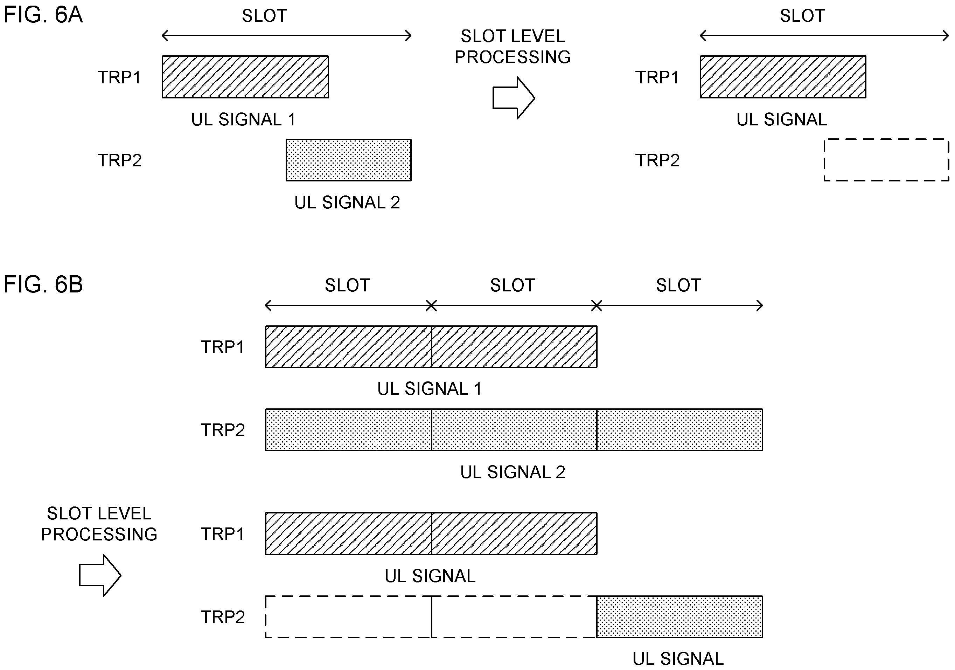

As illustrated in Fig. 6A, in the UL signal 1 for the TRP 1 and the UL signal 2 for the TRP 2 in one slot, when the UL signal 2 overlaps with the UL signal 1 in at least one symbol, and the UE selects the TRP 1 as the specific TRP (selects the UL signal 1 as the specific UL signal), the UE may drop the UL signal 2 that is not selected, or on the basis of the collision processing rule, may multiplex the UL signal 2 that is not selected into the UL signal 1.

As illustrated in Fig. 6B, in the UL signal 1 for the TRP 1 and the UL signal 2 for the TRP 2 over multiple slots, when the UL signal 2 overlaps with the UL signal 1 in at least one symbol, and the UE selects the TRP 1 as the specific TRP (selects the UL signal 1 as the specific UL signal), the UE may drop a signal of a slot overlapping with the UL signal 1 in the UL signal 2 that is not selected and transmit a signal of a remaining slot, or on the basis of the collision processing rule, may multiplex the signal of the slot overlapping with the UL signal 1 in the UL signal 2 that is not selected into the UL signal 1 and transmit the signal of the remaining slot.

### << Multi-Slot Level Processing >>

When at least one symbol of a plurality of UL signals over multiple slots overlaps, the UE may determine the TRP and UL signal for UL transmission in units of a plurality of slots (periods of the UL signal) including the UL signal.

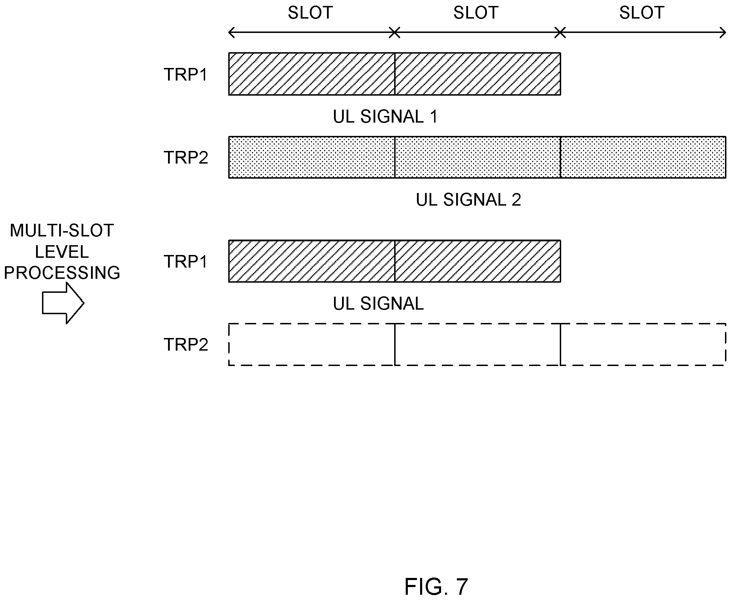

As illustrated in Fig. 7, in the UL signal 1 for the TRP 1 and the UL signal 2 for the TRP 2 over a plurality of slots, when the UL signal 2 overlaps the UL signal 1 in at least one symbol, and the UE selects the TRP 1 as the specific TRP (selects the UL signal 1 as the specific UL signal), the UE may drop the UL signal 2 that is not selected, or on the basis of a collision processing rule, may multiplex the UL signal 2 into the UL signal 1.

By the multi-slot level processing, a UL signal to be selected may be a PUCCH (long PUCCH) over multiple slots, a PUSCH over multiple slots, or the like.

According to this third embodiment, an overlapping UL signal can be processed every given time length, and recognition of the UL signal in the UE and the base station can be matched.

### < Fourth Embodiment >

Details will be described of TRP determination rule 6 in the first, second, and third embodiments.

A UL signal may be triggered (scheduled, activated) by DCI. A plurality of UL signals corresponding to a plurality of TRPs each may be triggered by DCI from a corresponding TRP.

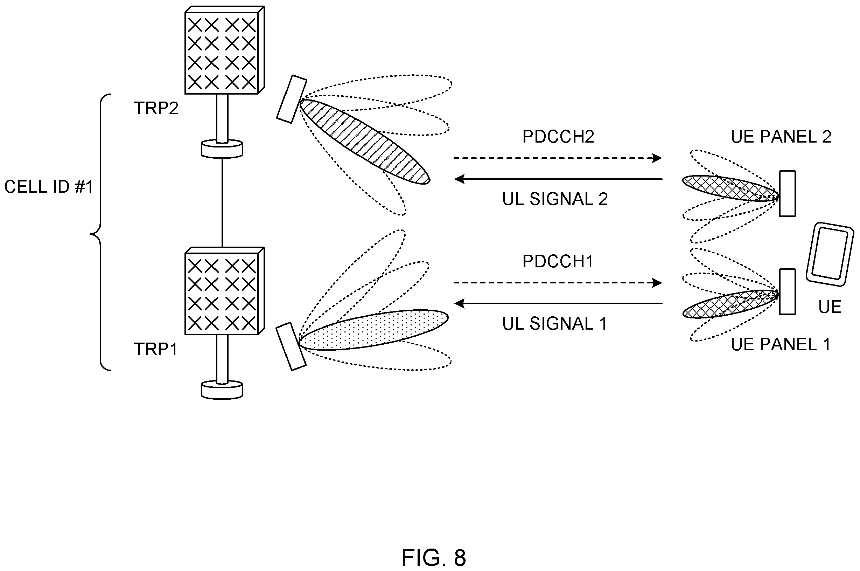

Fig. 8 is a diagram illustrating an example of transmission of DCI. In Fig. 7, it is assumed that the number of TRPs that transmit a PDSCH and DCI to the UE is two, but may be two or more. Further, in Fig. 7, as an example, it is assumed that TRPs 1 and 2 have the same cell ID #1.

In Fig. 8, TRPs 1 and 2 may be connected to each other by an ideal backhaul or a low latency non-ideal backhaul, or may be connected to each other by a non-ideal backhaul having a large-delay.

In Fig. 8, a PUSCH 1 whose transmission destination is the TRP 1 is scheduled by UL grant transmitted from the TRP 1 via a PDCCH 1, and a PUSCH 2 whose transmission destination is the TRP 2 is scheduled by UL grant transmitted from the TRP 2 via a PDCCH 2. The UE may use a UE panel 1 for reception of the PDCCH 1 and transmission of the PUSCH 1, or may use a UE panel 2 for reception of the PDCCH 2 and transmission of the PUSCH 2.

As illustrated in Fig. 8, when the UL signals from the plurality of TRPs are scheduled by the PDCCHs from the respective plurality of TRPs, the DCI may also be transmitted from each of the plurality of TRPs. It is sufficient that related higher layer signaling (higher layer parameter) (for example, RRC signaling (RRC IE)) is transmitted from at least one of the plurality of TRPs.

The UE may monitor a given search space set to detect a given DCI format that is CRC-scrambled with a given RNTI.

The given search space set may be set in the UE for each of at least one of a serving cell, a BWP, and a TRP.
It is sufficient that at least one of a period, a time domain resource, and a frequency domain resource of the given search space set is set by the higher layer parameter.

The given search space set may be associated with a given CORESET. The given CORESET may be set in the UE for each of at least one of the serving cell, the BWP, and the TRP.

When DCI is transmitted from each TRP, the UE may determine a TRP to which the DCI is applied. For example, the UE may determine the TRP to which the DCI is applied on the basis of at least one of the followings.
- CORESET
- Search space
- PDCCH configuration information (for example, "PDCCH-Config" of RRC IE)
- CDM group of DMRS ports of PDSCH or PDCCH
- Value of given RNTI (for example, INT-RNTI)
- Value of given field (for example, TRP ID) added to DCI (for example, each preemption instruction in DCI format 2_1)
- Configuration information regarding preemption instruction (for example, "INT-ConfigurationPerServingCell" of RRC IE)
- Sequence used for scrambling initialization of DMRS of PDCCH (for example, "pdcch-DMRS-ScramblingID" of RRC IE)

### << Example of TRP Determination Based on CORESET >>

On the basis of a CORESET associated with a given search space set for monitoring DCI from each TRP, the UE may determine a TRP to which the DCI is applied.

Configuration information of a PDCCH for each serving cell or each BWP (PDCCH configuration information, for example, "PDCCH-Config" of RRC IE) may include a list (for example, "contolResourceSetToAddModList" of RRC IE) of one or more pieces of configuration information of a CORESET (CORESET configuration information, for example, "PDCCH-Config" of RRC IE).

Further, the configuration information of the PDCCH may include a list (for example, "searchSpacesToAddModList" of RRC IE) of configuration information (search space configuration information, for example, "SearchSpace" of RRC IE) of one or more search space sets.

Each TRP may correspond to (or may be associated with) a CORESET configured by one piece of CORESET configuration information in the PDCCH configuration information. That is, in the UE, a CORESET may be set for each TRP.

The UE may assume that pieces of DCI respectively detected in a plurality of search space sets associated with different CORESETs are applied to different TRPs.

Non-overlapped time domain resources and frequency domain resources may be allocated to a plurality of CORESETs associated with different TRPs. Alternatively, at least some of the time domain resources and the frequency domain resources allocated to the plurality of CORESETs may overlap with each other.

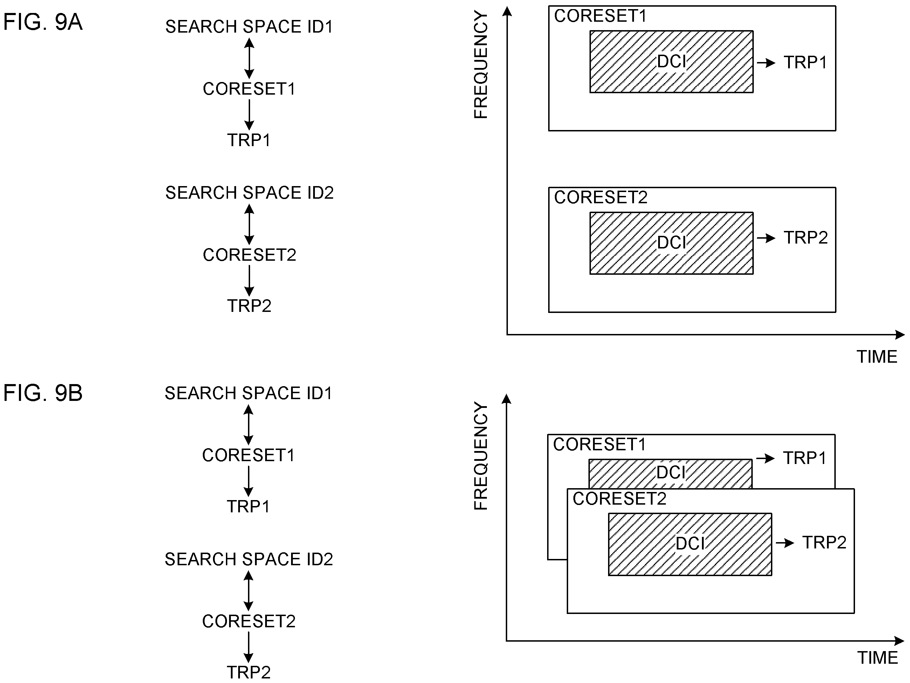

Figs. 9A and 9B are diagrams illustrating an example of TRP determination based on a CORESET. In Figs. 9A and 9B, it is assumed that DCI is transmitted from both the TRPs 1 and 2 as illustrated in Fig. 8. Note that the search space set of a search space IDx (x = 1, 2) illustrated in Figs. 9A and 9B may be described as a search space set x (x = 1, 2).

In Fig. 9A, CORESETs 1 and 2 do not overlap with each other in at least one of the time domain and the frequency domain. That is, in Fig. 9A, the CORESETs 1 and 2 may be allocated to exclusive frequency domain resources (for example, one or more PRBs) or time domain resources (for example, one or more symbols).

In Fig. 9A, the CORESETs 1 and 2 are associated with the different TRPs 1 and 2, respectively. When detecting DCI in a search space set 1 associated with the CORESET 1, the UE may apply the DCI to the TRP 1 associated with the CORESET 1.

Further, when detecting DCI in a search space set 2 associated with the CORESET 2, the UE may apply the DCI to the TRP 1 associated with CORESET2.

On the other hand, in Fig. 9B, the CORESETs 1 and 2 overlap with each other in at least one of the time domain and the frequency domain. That is, in Fig. 9B, the CORESETs 1 and 2 may be allocated to partially or completely overlapping frequency domain resources (for example, one or more PRBs) and time domain resources (for example, one or more symbols).

As illustrated in Fig. 9B, when the frequency domain resources and time domain resources allocated to the CORESETs 1 and 2 at least partially overlap with each other, even if the CORESETs 1 and 2 have different QCLs, there is a possibility that the UE cannot determine which TRP the detected DCI belongs to.

Thus, the UE may determine a TRP to which DCI detected in a search space set associated with a given CORSET is applied on the basis of any of the following (1) to (4).
(1) Value of RNTI (for example, INT-RNTI) used for CRC scrambling of the DCI
(2) Value of given field (for example, TRP ID) added to detected DCI
(3) Configuration information regarding preemption instruction (for example, "INT-ConfigurationPerServingCell" of RRC IE)
(4) Sequence used for scrambling initialization of DMRS of PDCCH (for example, "pdcch-DMRS-ScramblingID" of RRC IE)

For example, when the determination is based on (1), the TRP may be associated with the RNTI (for example, INT-RNTI) (or the value of the RNTI) used for CRC scrambling of the DCI. In this case, (the value of) the RNTI may be given to the UE for each TRP by the higher layer parameter. The UE may apply the DCI to the TRP associated with the RNTI in which the DCI is successfully detected, by monitoring (blind decoding) using the RNTI associated with each TRP.

Further, when the determination is based on (2), a given field indicating the TRP (or TRP ID) may be added in the DCI. The UE may apply the DCI (or each preemption instruction in the DCI) to the TRP indicated by the value of the given field in the detected DCI.

Further, when the determination is based on (3), information (For example, "trpId" of RRC IE) indicating a TRP to which each preemption instruction is applied may be included in the configuration information (for example, "INT-ConfigurationPerServingCell" of RRC IE) regarding the preemption instruction.

Alternatively, when the determination is based on (3), the configuration information regarding the preemption instruction (for example, "INT-ConfigurationPerServingCell" of RRC IE) may include position information (for example, "positionInDCI-1" and "positionInDCI-2" of RRC IE) of the preemption instruction corresponding to each TRP.

Further, when the determination is based on (4), the TRP may be associated with a sequence (or an ID of the sequence) for scrambling initialization of the DMRS of the PDCCH that transmits the DCI. In this case, the sequence may be given to the UE for each TRP by the higher layer parameter.

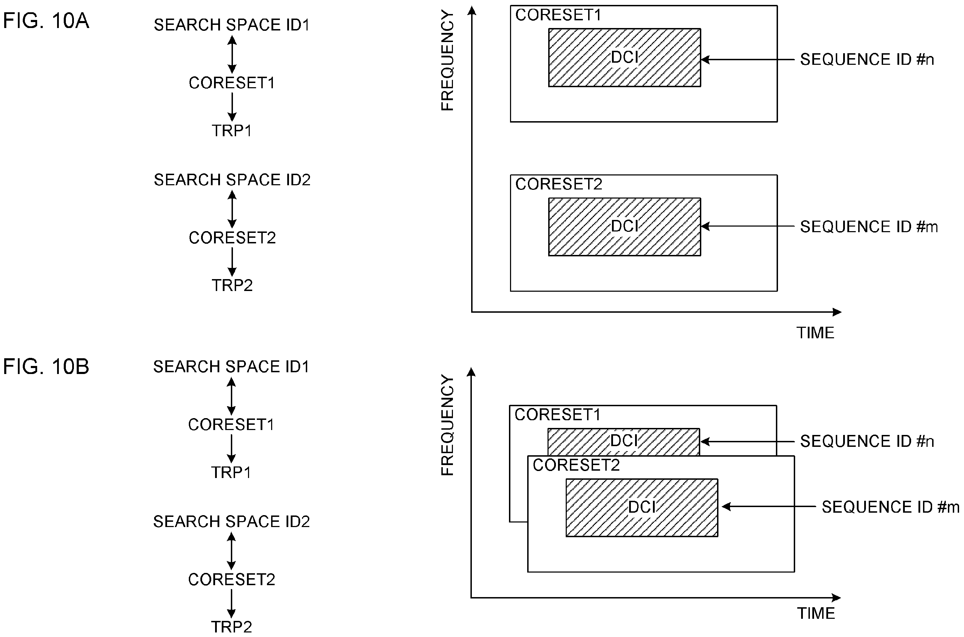

Figs. 10A and 10B are diagrams illustrating an example of TRP determination based on a sequence ID. In Figs. 10A and 10B, it is assumed that a plurality of sequences (or sequence IDs) is set in the UE for each CORESET. For example, in Figs. 10A and 10B, it is assumed that sequence IDs #n and #m are given to the UE for the CORESETs 1 and 2, but the present invention is not limited thereto. For example, in Figs. 10A and 10B, the sequence ID #n is associated with the TRP 1 and the sequence ID #m is associated with the TRP 2.

As illustrated in Figs. 10A and 10B, when the UE detects DCI on a PDCCH demodulated using a DMRS sequence generated by the sequence ID #n, it may be assumed that the DCI gives an instruction for preemption for DL transmission (for example, PDSCH) from the TRP 1 associated with the sequence ID #n. That is, the UE may assume that the instruction for preemption is given for the PDSCH scheduled by the PDCCH of the DMRS sequence generated by the sequence ID #n.

On the other hand, when the UE detects DCI on a PDCCH demodulated using a DMRS sequence generated by the sequence ID #m, it may be assumed that the DCI gives an instruction for preemption for DL transmission (for example, PDSCH) from the TRP 2 associated with the sequence ID #m. That is, the UE may assume that the instruction for preemption is given for the PDSCH scheduled by the PDCCH of the DMRS sequence generated by the sequence ID #m.

The TRP determination based on the sequence (or sequence ID) may be used when a plurality of CORESETs respectively associated with a plurality of TRPs overlaps with each other (Fig. 10B), or may be used when the plurality of CORESETs does not overlap each other (Fig. 10A). In Fig. 10A, the CORESET and TRP are associated with each other, but even when the CORESET and TRP are not associated with each other, a TRP to which DCI is applied may be determined by association between the sequence (or sequence ID) and the TRP.

### << Example of TRP Determination Based on Other Parameters >>

On the basis of a given search space set for monitoring DCI from each TRP, the UE may determine a TRP to which the DCI is applied.

Each TRP may correspond to (may be associated with) a search space set configured by one piece of search space configuration information in the PDCCH configuration information. That is, a search space set may be set for each TRP in the UE.

The UE may assume that DCIs respectively detected in different search space sets are applied to different TRPs. The different search space sets may be associated with the same CORESET, or may be associated with different CORESETs.

Alternatively, on the basis of PDCCH configuration information (for example, "PDCCH-Config" of RRC IE) including configuration information of a given search space set for monitoring DCI from each TRP and configuration information of a CORESET associated with the given search space set, the UE may determine a TRP to which the DCI is applied.

Each TRP may correspond to (or may be associated with) the PDCCH configuration information. That is, the PDCCH configuration information may be set for each TRP in the UE.

Alternatively, the UE may determine the TRP to which the DCI is applied on the basis of a CDM group of DMRS ports of a PDSCH (or PDCCH) from each TRP. Each TRP may correspond to (or may be associated with) the CDM group.

According to this fourth embodiment, when a plurality of UL signals to a plurality of TRPs is associated with a plurality of pieces of DCIs, the UE may determine a TRP for UL transmission on the basis of the DCIs.

### (Radio Communication System)

Hereinafter, a configuration will be described of a radio communication system according to one embodiment of the present disclosure. In this radio communication system, communication is performed using one or a combination of the radio communication methods according to the embodiments of the present disclosure.

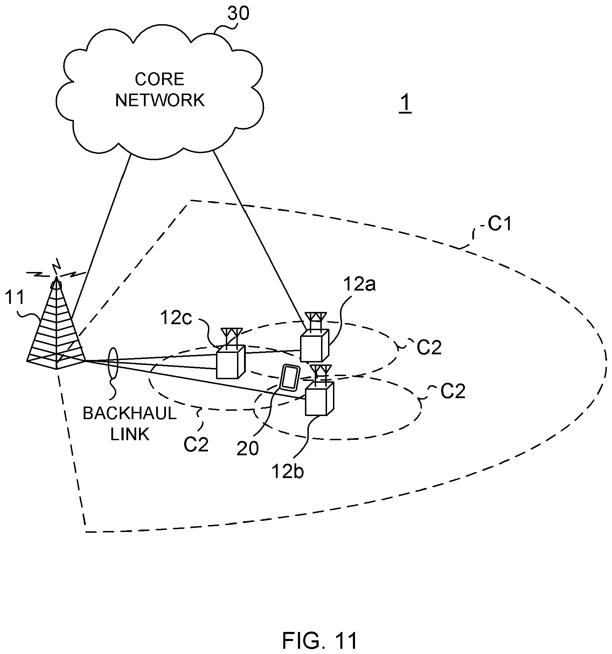

Fig. 11 is a diagram illustrating an example of a schematic configuration of the radio communication system according to one embodiment. A radio communication system 1 may be a system that implements communication using long term evolution (LTE), 5th generation mobile communication system New Radio (5G NR), and the like drafted as the specification by third generation partnership project (3GPP).

Further, the radio communication system 1 may support dual connectivity (multi-RAT dual connectivity (MR-DC)) between a plurality of radio access technologies (RATs). The MR-DC may include dual connectivity between LTE (Evolved Universal Terrestrial Radio Access (E-UTRA)) and NR (E-UTRA-NR Dual Connectivity (EN-DC)), dual connectivity between NR and LTE (NR-E-UTRA Dual Connectivity (NE-DC)), and the like.

In the EN-DC, an LTE (E-UTRA) base station (eNB) is a master node (MN), and an NR base station (gNB) is a secondary node (SN). In the NE-DC, an NR base station (gNB) is a MN, and an LTE (E-UTRA) base station (eNB) is a SN.

The radio communication system 1 may support dual connectivity between a plurality of base stations in the same RAT (for example, dual connectivity in which both MN and SN are NR base stations (gNB) (NR-NR dual connectivity (NN-DC)).

The radio communication system 1 may include a base station 11 that forms a macro cell C1 with a relatively wide coverage, and base stations 12 (12a to 12c) that are arranged within the macro cell C1 and that form small cells C2 narrower than the macro cell C1. A user terminal 20 may be located in at least one cell. The arrangement, number, and the like of cells and the user terminals 20 are not limited to the aspects illustrated in the figure. Hereinafter, the base stations 11 and 12 will be collectively referred to as "base stations 10" when these are not distinguished from each other.

The user terminal 20 may be connected to at least one of the plurality of base stations 10. The user terminal 20 may use at least one of carrier aggregation (CA) using a plurality of component carriers (CC) and dual connectivity (DC).

Each CC may be included in at least one of a frequency range 1 (FR1) and a second frequency range 2 (FR2). The macro cell C1 may be included in the FR1, and the small cell C2 may be included in the FR2. For example, the FR1 may be a frequency range of 6 GHz or less (sub-6 GHz), and the FR2 may be a frequency range higher than 24 GHz (above-24 GHz). Note that the frequency ranges, definitions, and the like of the FR1 and FR2 are not limited thereto, and, for example, the FR1 may correspond to a frequency range higher than the FR2.

Further, the user terminal 20 may perform communication in each CC using at least one of time division duplex (TDD) and frequency division duplex (FDD).

The plurality of base stations 10 may be connected to each other by wire (for example, an optical fiber or an X2 interface in compliance with common public radio interface (CPRI)) or by radio (for example, NR communication). For example, when the NR communication is used as a backhaul between the base stations 11 and 12, the base station 11 corresponding to a higher-level station may be referred to as an integrated access backhaul (IAB) donor, and the base station 12 corresponding to a relay station (relay) may be referred to as an IAB node.

The base station 10 may be connected to a core network 30 via another base station 10 or directly. The core network 30 may include, for example, at least one of an evolved packet core (EPC), a 5G core network (5GCN), a next generation core (NGC), and the like.

The user terminal 20 may be a terminal corresponding to at least one of communication methods such as LTE, LTE-A, and 5G.

In the radio communication system 1, a radio access method based on orthogonal frequency division multiplexing (OFDM) may be used. For example, in at least one of downlink (DL) and uplink (UL), cyclic prefix OFDM (CP-OFDM), discrete Fourier transform spread OFDM (DFT-s-OFDM), orthogonal frequency division multiple access (OFDMA), single carrier frequency division multiple access (SC-FDMA), and the like may be used.

The radio access method may be referred to as a waveform. Note that in the radio communication system 1, another radio access method (for example, another single carrier transmission method or another multi-carrier transmission method) may be used as the UL and DL radio access method.

In the radio communication system 1, as a downlink channel, a physical downlink shared channel (PDSCH) shared by the user terminals 20, a physical broadcast channel (PBCH), a physical downlink control channel (PDCCH), or the like may be used.

Further, in the radio communication system 1, as an uplink channel, a physical uplink shared channel (PUSCH) shared by the user terminals 20, a physical uplink control channel (PUCCH), a physical random access channel (PRACH), or the like may be used.

The PDSCH transmits user data, higher layer control information, a system information block (SIB), and the like. The PUSCH may transmit user data, higher layer control information, and the like. Further, the PBCH may transmit a master information block (MIB).

The PDCCH may transmit lower layer control information. The lower layer control information may include, for example, downlink control information (DCI) including scheduling information of at least one of the PDSCH and the PUSCH.

Note that DCI that schedules the PDSCH may be referred to as DL assignment, DL DCI, or the like, and DCI that schedules the PUSCH may be referred to as UL grant, UL DCI, or the like. Note that the PDSCH may be replaced with DL data, and the PUSCH may be replaced with UL data.

A control resource set (CORESET) and a search space may be used to detect the PDCCH. The CORESET corresponds to a resource that searches for DCI. The search space corresponds to a search area and a search method for PDCCH candidates. One CORESET may be associated with one or a plurality of search spaces. The UE may monitor the CORESET associated with a certain search space on the basis of search space configuration.

One search space may correspond to a PDCCH candidate corresponding to one or a plurality of aggregation levels. One or a plurality of search spaces may be referred to as a search space set. Note that "search space", "search space set", "search space configuration", "search space set configuration", "CORESET", "CORESET configuration", and the like in the present disclosure may be replaced with each other.

Uplink control information (UCI) including at least one of channel state information (CSI), delivery confirmation information (which may be referred to as, for example, hybrid automatic repeat request acknowledgement (HARQ-ACK), ACK/NACK, or the like), scheduling request (SR), and the like may be transmitted by the PUCCH. By means of the PRACH, a random access preamble for establishing a connection with a cell may be transmitted.

Note that in the present disclosure, downlink, uplink, and the like may be expressed without "link". Further, various channels may be expressed without adding "physical" at the beginning thereof.

In the radio communication system 1, a synchronization signal (SS), a downlink reference signal (DL-RS), and the like may be transmitted. In the radio communication systems 1, a cell-specific reference signal (CRS), a channel state information reference signal (CSI-RS), a demodulation reference signal (DMRS), a positioning reference signal (PRS), a phase tracking reference signal (PTRS), and the like may be transmitted as the DL-RS.

The synchronization signal may be, for example, at least one of a primary synchronization signal (PSS) and a secondary synchronization signal (SSS). A signal block including the SS (PSS, SSS) and the PBCH (and the DMRS for the PBCH) may be referred to as an SS/PBCH block, an SS block (SSB), and the like. Note that the SS, the SSB, or the like may also be referred to as a reference signal.

Further, in the radio communication system 1, the sounding reference signal (SRS), the demodulation reference signal (DMRS), and the like may be transmitted as an uplink reference signal (UL-RS). Note that the DMRS may be referred to as a "user terminal-specific reference signal (UE-specific Reference Signal)".

### (Base station)

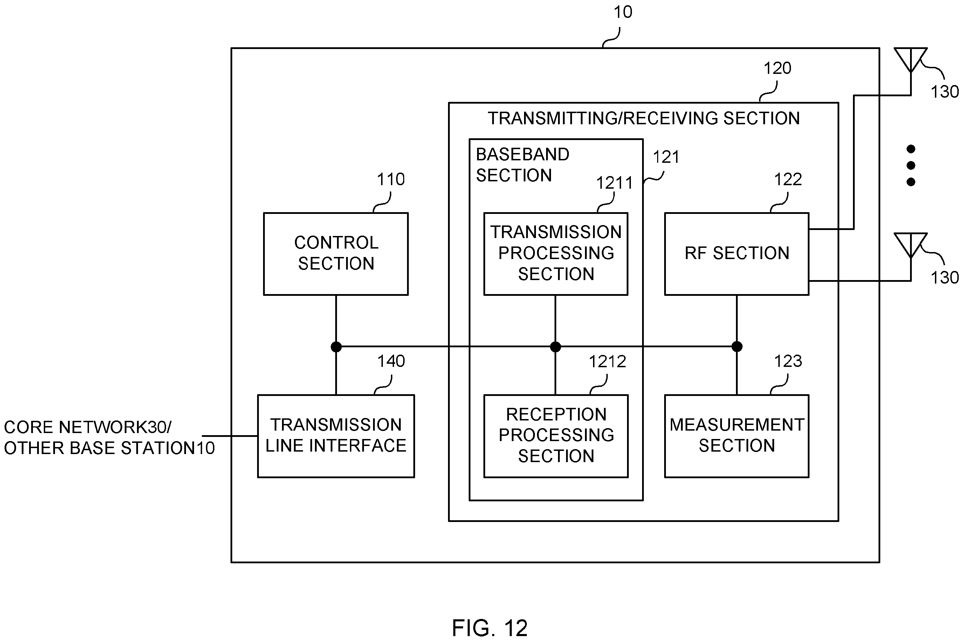

Fig. 12 is a diagram illustrating an example of a configuration of the base station according to one embodiment. The base station 10 includes a control section 110, a transmitting/receiving section 120, a transmission/reception antenna 130, and a transmission line interface 140. Note that one or more each of the control sections 110, the transmitting/receiving sections 120, the transmission/reception antennas 130, and the transmission line interfaces 140 may be included.

Note that this example mainly describes functional blocks of characteristic parts in the present embodiment, and it may be assumed that the base station 10 also includes other functional blocks necessary for radio communication. A part of processing of each section described below may be omitted.

The control section 110 controls the entire base station 10. The control section 110 can include a controller, a control circuit, and the like that are described on the basis of common recognition in the technical field related to the present disclosure.

The control section 110 may control signal generation, scheduling (for example, resource allocation, mapping), and the like. The control section 110 may control transmission/reception, measurement, and the like using the transmitting/receiving section 120, the transmission/reception antenna 130, and the transmission line interface 140. The control section 110 may generate data, control information, a sequence, and the like to be transmitted as signals, and may transfer the data, the control information, the sequence, and the like to the transmitting/receiving section 120. The control section 110 may perform call processing (such as configuration or release) of a communication channel, state management of the base station 10, and management of a radio resource.

The transmitting/receiving section 120 may include a baseband section 121, a radio frequency (RF) section 122, and a measurement section 123. The baseband section 121 may include a transmission processing section 1211 and a reception processing section 1212. The transmitting/receiving section 120 can include a transmitter/receiver, an RF circuit, a baseband circuit, a filter, a phase shifter, a measurement circuit, a transmission/reception circuit, and the like that are described on the basis of common recognition in the technical field related to the present disclosure.

The transmitting/receiving section 120 may be formed as an integrated transmission/reception section, or may include a transmission section and a reception section. The transmission section may include the transmission processing section 1211 and the RF section 122. The reception section may include the reception processing section 1212, the RF section 122, and the measurement section 123.

The transmission/reception antenna 130 can include an antenna described on the basis of common recognition in the technical field related to the present disclosure, for example, an array antenna or the like.

The transmitting/receiving section 120 may transmit the above-described downlink channel, synchronization signal, downlink reference signal, and the like. The transmitting/receiving section 120 may receive the above-described uplink channel, uplink reference signal, and the like.

The transmitting/receiving section 120 may form at least one of a transmission beam and a reception beam by using digital beam forming (for example, precoding), analog beam forming (for example, phase rotation), and the like.

The transmitting/receiving section 120 (transmission processing section 1211) may perform packet data convergence protocol (PDCP) layer processing, radio link control (RLC) layer processing (for example, RLC retransmission control), medium access control (MAC) layer processing (for example, HARQ retransmission control), and the like, for example, on data, control information, and the like acquired from the control section 110, to generate a bit string to be transmitted.

The transmitting/receiving section 120 (transmission processing section 1211) may perform transmission processing such as channel encoding (which may include error correction encoding), modulation, mapping, filtering processing, discrete Fourier transform (DFT) processing (if necessary), inverse fast Fourier transform (IFFT) processing, precoding, or digital-analog conversion on the bit string to be transmitted, to output a baseband signal.

The transmitting/receiving section 120 (RF section 122) may perform modulation to a radio frequency band, filtering processing, amplification, and the like on the baseband signal, to transmit a signal in the radio frequency band via the transmission/reception antenna 130.

Meanwhile, the transmitting/receiving section 120 (RF section 122) may perform amplification, filtering processing, demodulation to a baseband signal, and the like on the signal in the radio frequency band received by the transmission/reception antenna 130.

The transmitting/receiving section 120 (reception processing section 1212) may apply reception processing such as analog-digital conversion, fast Fourier transform (FFT) processing, inverse discrete Fourier transform (IDFT) processing (if necessary), filtering processing, demapping, demodulation, decoding (which may include error correction decoding), MAC layer processing, RLC layer processing, or PDCP layer processing on the acquired baseband signal to acquire user data and the like.

The transmitting/receiving section 120 (measurement section 123) may perform measurement on the received signal. For example, the measurement section 123 may perform radio resource management (RRM) measurement, channel state information (CSI) measurement, and the like on the basis of the received signal. The measurement section 123 may measure received power (for example, reference signal received power (RSRP)), received quality (for example, reference signal received quality (RSRQ), a signal to interference plus noise ratio (SINR), a signal to noise ratio (SNR)), signal strength (for example, received signal strength indicator (RSSI)), propagation path information (for example, CSI), and the like. The measurement result may be output to the control section 110.

The transmission line interface 140 may perform transmission/reception (backhaul signaling) of a signal to/from apparatuses, other base stations 10, and the like included in the core network 30, and may perform acquisition, transmission, and the like of user data (user plane data), control plane data, and the like for the user terminal 20.

Note that the transmission section and the reception section of the base station 10 in the present disclosure may include at least one of the transmitting/receiving section 120 and the transmission/reception antenna 130.

### (User Terminal)

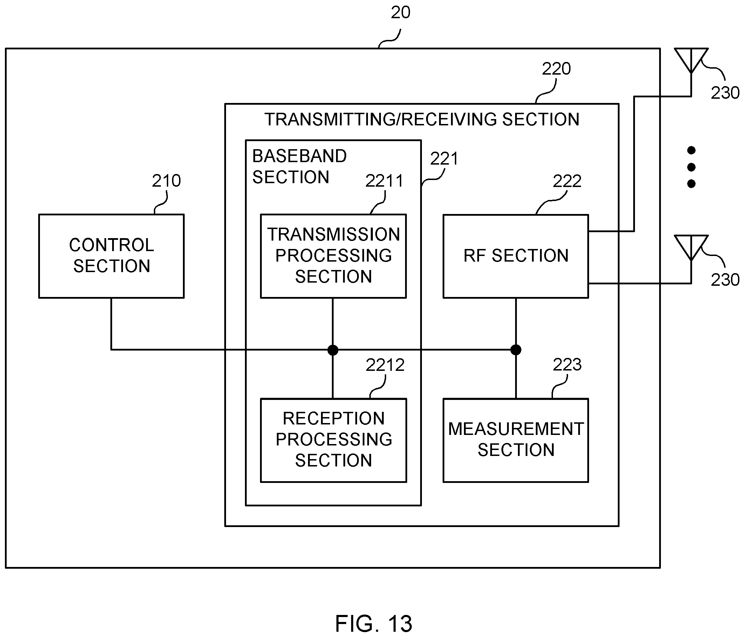

Fig. 13 is a diagram illustrating an example of a configuration of a user terminal according to one embodiment. The user terminal 20 includes a control section 210, a transmitting/receiving section 220, and a transmission/reception antenna 230. Note that one or more each of the control sections 210, the transmitting/receiving sections 220, and the transmission/reception antennas 230 may be included.

Note that this example mainly describes functional blocks of characteristic parts of the present embodiment, and it may be assumed that the user terminal 20 also includes other functional blocks necessary for radio communication. A part of processing of each section described below may be omitted.

The control section 210 controls the entire user terminal 20. The control section 210 can include a controller, a control circuit, and the like that are described on the basis of common recognition in the technical field related to the present disclosure.

The control section 210 may control signal generation, mapping, and the like. The control section 210 may control transmission/reception, measurement, and the like using the transmitting/receiving section 220 and the transmission/reception antenna 230. The control section 210 may generate data to be transmitted as a signal, control information, a sequence, and the like, and may transfer the data, the control information, the sequence, and the like to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can include a transmitter/receiver, an RF circuit, a baseband circuit, a filter, a phase shifter, a measurement circuit, a transmission/reception circuit, and the like that are described on the basis of common recognition in the technical field related to the present disclosure.

The transmitting/receiving section 220 may be formed as an integrated transmission/reception section, or may include a transmission section and a reception section. The transmission section may include the transmission processing section 2211 and the RF section 222. The reception section may include the reception processing section 2212, the RF section 222, and the measurement section 223.

The transmission/reception antenna 230 can include an antenna described on the basis of common recognition in the technical field related to the present disclosure for example, an array antenna or the like.

The transmitting/receiving section 220 may receive the above-described downlink channel, synchronization signal, downlink reference signal, and the like. The transmitting/receiving section 220 may transmit the above-described uplink channel, uplink reference signal, and the like.

The transmitting/receiving section 220 may form at least one of a transmission beam and a reception beam by using digital beam forming (for example, precoding), analog beam forming (for example, phase rotation), and the like.

The transmitting/receiving section 220 (transmission processing section 2211) may perform PDCP layer processing, RLC layer processing (for example, RLC retransmission control), MAC layer processing (for example, HARQ retransmission control), and the like, for example, on data, control information, and the like acquired from the control section 210, to generate a bit string to be transmitted.

The transmitting/receiving section 220 (transmission processing section 2211) may perform transmission processing such as channel encoding (which may include error correction encoding), modulation, mapping, filtering processing, DFT processing (if necessary), IFFT processing, precoding, or digital-analog conversion on the bit string to be transmitted, to output a baseband signal.

Note that whether or not to apply DFT processing may be determined on the basis of configuration of transform precoding. When transform precoding is enabled for a channel (for example, PUSCH), the transmitting/receiving section 220 (transmission processing section 2211) may perform DFT processing as the transmission processing in order to transmit the channel using a DFT-s-OFDM waveform. When it is not the case, DFT processing need not be performed as the transmission processing.

The transmitting/receiving section 220 (RF section 222) may perform modulation to a radio frequency band, filtering processing, amplification, and the like on the baseband signal, to transmit a signal in the radio frequency band via the transmission/reception antenna 230.

Meanwhile, the transmitting/receiving section 220 (RF section 222) may perform amplification, filtering processing, demodulation to a baseband signal, and the like on the signal in the radio frequency band received by the transmission/reception antenna 230.

The transmitting/receiving section 220 (reception processing section 2212) may apply reception processing such as analog-digital conversion, FFT processing, IDFT processing (if necessary), filtering processing, demapping, demodulation, decoding (which may include error correction decoding), MAC layer processing, RLC layer processing, or PDCP layer processing on the acquired baseband signal to acquire user data and the like.

The transmitting/receiving section 220 (measurement section 223) may perform measurement on the received signal. For example, the measurement section 223 may perform RRM measurement, CSI measurement, and the like on the basis of the received signal. The measurement section 223 may measure received power (for example, RSRP), received quality (for example, RSRQ, SINR, SNR), signal strength (for example, RSSI), propagation path information (for example, CSI), and the like. The measurement result may be output to the control section 210.

Note that the transmission section and the reception section of the user terminal 20 in the present disclosure may include at least one of the transmitting/receiving section 220, the transmission/reception antenna 230, and the transmission line interface 240.

Further, the transmitting/receiving section 220 may receive instructions of a plurality of uplink signals using a plurality of panels (for example, UE panel, TRP). When there is a period (for example, one or more symbols, one or more slots, a plurality of slots including an uplink signal) in which the plurality of uplink signals overlaps each other in a case where transmission is not performed by using the plurality of panels simultaneously, the control section 210 may transmit one first uplink signal (for example, specific UL signal) based on the plurality of uplink signals by using one first panel (for example, specific UE panel, specific TRP) among the plurality of panels in the period.

The control section 210 may determine the first panel on the basis of types of the plurality of uplink signals, and determine at least one piece of processing (for example, collision processing) of transmission, dropping, and multiplexing of one or more uplink signals on the basis of types of the one or more uplink signals using the first panel (the first embodiment).

The control section 210 may determine at least one piece of processing of transmission, dropping, and multiplexing of one or more uplink signals for each of the plurality of panels on the basis of types of one or more uplink signals using each of the plurality of panels, and determine the first panel on the basis of a type of an uplink signal to be transmitted by processing for each of the plurality of panels (the second embodiment).

When a second uplink signal (for example, an uplink signal other than the first uplink signal among the plurality of uplink signals) using a second panel (for example, a panel other than the first panel among the plurality of panels) overlaps with the first uplink signal in the period, the control section 210 may drop the second uplink signal or multiplex information included in the second uplink signal to the first uplink signal in any of a symbol including the period, a guard period and the symbol including the period, a slot including the period, and a time resource of the second uplink signal (the third embodiment).

A case where transmission using the plurality of panels is not performed simultaneously may be a case where supporting transmission using the plurality of panels simultaneously is not reported, or a case where performing transmission using the plurality of panels simultaneously is not set.

### (Hardware Configuration)

Note that the block diagrams that have been used to describe the above embodiments illustrate blocks in functional units. These functional blocks (configuration sections) may be implemented in any combinations of at least one of hardware and software. Further, the method for implementing each functional block is not particularly limited. That is, each functional block may be implemented by a single apparatus physically or logically aggregated, or may be implemented by directly or indirectly connecting two or more physically or logically separate apparatuses (using wire, radio, or the like, for example) together and using these plural apparatuses. The functional blocks may be implemented by combining software with the above-described single apparatus or the above-described plurality of apparatuses.

Here, the function includes, but is not limited to, deciding, determining, judging, calculating, computing, processing, deriving, investigating, searching, ascertaining, receiving, transmitting, outputting, accessing, solving, selecting, choosing, establishing, comparing, assuming, expecting, considering, broadcasting, notifying, communicating, forwarding, configuring, reconfiguring, allocating, mapping, and assigning. For example, a functional block (configuration section) that causes transmission to function may be referred to as a transmitting unit, a transmitter, and the like. In any case, as described above, the implementation method is not particularly limited.

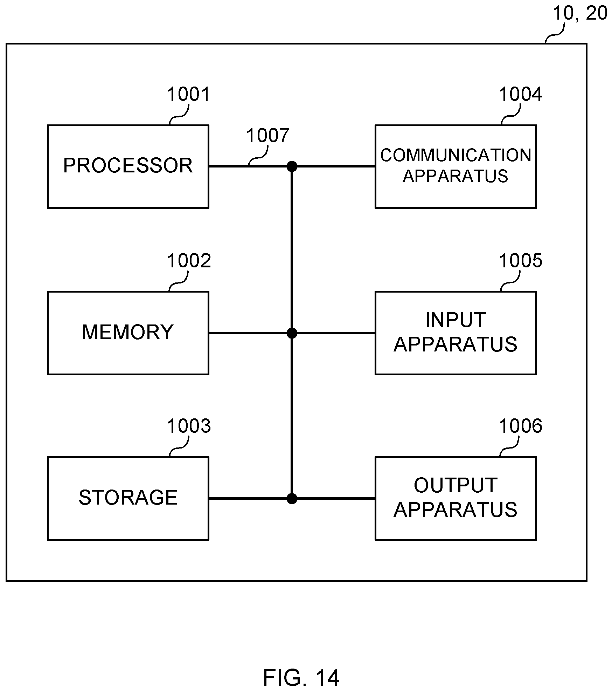

For example, the base station, the user terminal, and the like according to one embodiment of the present disclosure may function as a computer that executes the processing of the radio communication method of the present disclosure. Fig. 14 is a diagram illustrating an example of a hardware configuration of the base station and the user terminal according to one embodiment. Physically, the above-described base station 10 and user terminal 20 may be formed as a computer apparatus that includes a processor 1001, a memory 1002, a storage 1003, a communication apparatus 1004, an input apparatus 1005, an output apparatus 1006, a bus 1007, and the like.

Note that in the present disclosure, the terms such as an apparatus, a circuit, a device, a section, and a unit can be replaced with each other. The hardware configuration of the base station 10 and the user terminal 20 may include one or a plurality of apparatuses illustrated in the figure, or does not have to include some apparatuses.

For example, although only one processor 1001 is illustrated, a plurality of processors may be provided. Further, the processing may be executed by one processor,
or the processing may be executed by two or more processors simultaneously, sequentially, or using another method.
Note that the processor 1001 may be implemented by one or more chips.

Each of functions of the base station 10 and the user terminal 20 is implemented by, for example, the processor 1001 executing an operation by reading given software (program) on hardware such as the processor 1001 or the memory 1002, controlling communication via the communication apparatus 1004, and controlling at least one of reading and writing of data in the memory 1002 and the storage 1003.

The processor 1001 may control the entire computer by, for example, causing an operating system to be operated. The processor 1001 may include a central processing unit (CPU) including an interface with peripheral equipment, a control device, an arithmetic device, a register, and the like. For example, at least a part of the above-described control section 110 (210), transmitting/receiving section 120 (220), and the like may be implemented by the processor 1001.

Further, the processor 1001 reads programs (program codes), software modules, or data, from at least one of the storage 1003 and the communication apparatus 1004, into the memory 1002, and executes various types of processing in accordance with these. As the program, a program to cause a computer to execute at least a part of the operation described in the above-described embodiment is used. For example, the control section 110 (210) may be implemented by a control program that is stored in the memory 1002 and operates in the processor 1001, and other functional blocks may be implemented similarly.

The memory 1002 is a computer-readable recording medium, and may include, for example, at least one of a read only memory (ROM), an erasable programmable ROM (EPROM), an electrically EPROM (EEPROM), a random access memory (RAM) and/or other appropriate storage media. The memory 1002 may be referred to as a register, a cache, a main memory (main storage apparatus), or the like. The memory 1002 can store programs (program codes), software modules, and the like that are executable for implementing the radio communication method according to one embodiment of the present disclosure.

The storage 1003 is a computer-readable recording medium, and may include, for example, at least one of a flexible disk, a floppy (registered trademark) disk, a magneto-optical disk (for example, a compact disc ROM (CD-ROM) and the like), a digital versatile disc, a Blu-ray (registered trademark) disk), a removable disk, a hard disk drive, a smart card, a flash memory device (for example, a card, a stick, a key drive), a magnetic stripe, a database, a server, and other appropriate storage media. The storage 1003 may be referred to as an auxiliary storage apparatus.

The communication apparatus 1004 is hardware (transmission/reception device) for performing inter-computer communication through at least one of a wired network and a radio network, and may be referred to as, for example, a network device, a network controller, a network card, a communication module, and the like. The communication apparatus 1004 may include a high frequency switch, a duplexer, a filter, a frequency synthesizer, and the like in order to implement, for example, at least one of frequency division duplex (FDD) and time division duplex (TDD). For example, the above-described transmitting/receiving section 120 (220), transmission/reception antenna 130 (230), and the like may be implemented by the communication apparatus 1004. In the transmitting/receiving section 120 (220), implementation may be made in which a transmitting section 120a (220a) and a receiving section 120b(220b) are separated from each other physically or logically.

The input apparatus 1005 is an input device that receives input from the outside (for example, a keyboard, a mouse, a microphone, a switch, a button, a sensor, or the like). The output apparatus 1006 is an output device that performs output to the outside (for example, a display, a speaker, a light emitting diode (LED) lamp, or the like). Note that the input apparatus 1005 and the output apparatus 1006 may be provided in an integrated configuration (for example, a touch panel).

Further, these apparatuses such as the processor 1001 and the memory 1002 are connected to each other by the bus 1007 to communicate information. The bus 1007 may be formed with a single bus, or may be formed with different buses for respective connections between the apparatuses.

Further, the base station 10 and the user terminal 20 may include hardware such as a microprocessor, a digital signal processor (DSP), an application specific integrated circuit (ASIC), a programmable logic device (PLD), or a field programmable gate array (FPGA), and some or all of the functional blocks may be implemented by the hardware. For example, the processor 1001 may be implemented by at least one of these pieces of hardware.

### (Variations)

Note that terms described in the present disclosure and terms necessary for understanding the present disclosure may be replaced with terms that have the same or similar meanings. For example, a channel, a symbol, and a signal (signal or signaling) may be replaced with each other. Further, the signal may be a message. A reference signal can be abbreviated as an "RS", and may be referred to as a pilot, a pilot signal, and the like, depending on which standard applies. Further, a component carrier (CC) may be referred to as a cell, a frequency carrier, a carrier frequency, and the like.

A radio frame may include one or a plurality of periods (frames) in the time domain. Each of the one or plurality of periods (frames) constituting the radio frame may be referred to as a subframe. Furthermore, the subframe may include one or a plurality of slots in the time domain. The subframe may be a fixed time length (for example, 1 ms) that is not dependent on numerology.

Here, the numerology may be a communication parameter applied to at least one of transmission and reception of a certain signal or channel. The numerology may indicate at least one of, for example, a subcarrier spacing (SCS), a bandwidth, a symbol length, a cyclic prefix length, a transmission time interval (TTI), the number of symbols per TTI, a radio frame configuration, specific filtering processing performed by a transceiver in the frequency domain, and a specific windowing processing performed by the transceiver in the time domain.

A slot may include one or a plurality of symbols in the time domain (orthogonal frequency division multiplexing (OFDM) symbols, single carrier frequency division multiple access (SC-FDMA) symbols, and the like). Further, the slot may be a time unit based on the numerology.

The slot may include a plurality of mini slots. Each mini slot may include one or a plurality of symbols in the time domain. Further, the mini slot may be referred to as a sub-slot. Each mini slot may include fewer symbols than the slot. A PDSCH (or PUSCH) transmitted in a time unit larger than a mini slot may be referred to as a PDSCH (PUSCH) mapping type A. A PDSCH (or PUSCH) transmitted using a mini slot may be referred to as a PDSCH (PUSCH) mapping type B.

The radio frame, subframe, slot, mini slot, and symbol all represent the time unit in signal communication. Other names may be used respectively corresponding to the radio frame, subframe, slot, mini slot, and symbol. Note that time units such as the frame, subframe, slot, mini slot, and symbol in the present disclosure may be replaced with each other.

For example, one subframe may be referred to as a TTI, a plurality of consecutive subframes may be referred to as a TTI, or one slot or one mini slot may be referred to as a TTI. That is, at least one of the subframe and TTI may be a subframe (1 ms) in the existing LTE, may be a period shorter than 1 ms (for example, one to thirteen symbols), or may be a period longer than 1 ms. Note that a unit to represent a TTI may be referred to as slot, mini slot, or the like, instead of subframe.

Here, the TTI refers to the minimum time unit of scheduling in radio communication, for example. For example, in the LTE system, a base station performs scheduling to allocate radio resources (a frequency bandwidth, transmit power, and the like that can be used in each user terminal) to each user terminal in TTI units. Note that a definition of the TTI is not limited thereto.

The TTI may be a transmission time unit of a channel-encoded data packet (transport block), a code block, a codeword, or the like, or may be a processing unit of scheduling, link adaptation, or the like. Note that when the TTI is given, a time interval (for example, the number of symbols) to which the transport block, code block, codeword, or the like is actually mapped may be shorter than the TTI.

Note that when one slot or one mini slot is referred to as a TTI, one or more TTIs (that is, one or more slots or one or more mini slots) may be the minimum time unit of scheduling. Further, the number of slots (the number of mini slots) constituting the minimum time unit of the scheduling may be controlled.

A TTI having a time length of 1 ms may be referred to as a usual TTI (TTI in 3GPP Rel. 8 to 12), a normal TTI, a long TTI, a usual subframe, a normal subframe, a long subframe, a slot, and the like. A TTI shorter than the usual TTI may be referred to as a shortened TTI, a short TTI, a partial TTI (or fractional TTI), a shortened subframe, a short subframe, a mini slot, a sub-slot, a slot, or the like.

Note that the long TTI (for example, the usual TTI, subframe, or the like) may be replaced with a TTI having a time length exceeding 1 ms, and the short TTI (for example, the shortened TTI or the like) may be replaced with a TTI having a TTI length less than the TTI length of the long TTI and not less than 1 ms.

A resource block (RB) is a resource allocation unit in the time domain and the frequency domain, and may include one or a plurality of consecutive subcarriers in the frequency domain. The number of subcarriers included in the RB may be the same regardless of the numerology, and may be twelve, for example. The number of subcarriers included in the RB may be determined on the basis of the numerology.

Further, the RB may include one or a plurality of symbols in the time domain, and may be one slot, one mini slot, one subframe or one TTI in length. One TTI, one subframe, and the like each may include one or a plurality of resource blocks.

Note that one or a plurality of RBs may be referred to as a physical resource block (physical RB (PRB)), a subcarrier group (SCG), a resource element group (REG), a PRB pair, an RB pair, or the like.

Further, the resource block may include one or a plurality of resource elements (REs). For example, one RE may be a radio resource area of one subcarrier and one symbol.

A bandwidth part (BWP) (which may be referred to as a partial bandwidth or the like) may represent a subset of consecutive common resource blocks (RBs) for certain numerology in a certain carrier. Here, the common RB may be specified by the index of the RB based on a common reference point of the carrier. The PRB may be defined in a certain BWP and be numbered within the BWP.

The BWP may include a BWP for UL (UL BWP) and a BWP for DL (DL BWP). For the UE, one or a plurality of BWPs may be configured within one carrier.

At least one of the configured BWPs may be active, and the UE does not have to assume to transmit and receive a given signal/channel outside the active BWP. Note that "cell", "carrier", or the like in the present disclosure may be replaced with "BWP".

Note that structures of the radio frame, subframe, slot, mini slot, symbol, and the like described above are merely examples. For example, configurations such as the number of subframes included in the radio frame, the number of slots per subframe or radio frame, the number of mini slots included in the slot, the number of symbols and RBs included in the slot or mini slot, the number of subcarriers included in the RB, the number of symbols in the TTI, the symbol length, the cyclic prefix (CP) length, and the like can be variously changed.

Further, the information, parameters, and the like described in the present disclosure may be represented by using absolute values, may be represented by using relative values with respect to given values, or may be represented by using other corresponding information. For example, the radio resource may be indicated by a given index.

Names used for the parameters and the like in the present disclosure are not restrictive names in any respect. Furthermore, any mathematical expression or the like that uses these parameters may differ from those explicitly disclosed in the present disclosure. Since various channels (PUCCH, PDCCH, and the like) and information elements can be identified by any suitable names, various names assigned to these various channels and information elements are not restrictive names in any respect.

The information, signals, and the like described in the present disclosure may be represented by using any of a various different technologies. For example, data, an instruction, a command, information, a signal, a bit, a symbol, a chip, and the like that can be referenced throughout the above description may be represented by a voltage, a current, an electromagnetic wave, a magnetic field or a magnetic particle, an optical field or a photon, or any combination of these.

Further, the information, signals, and the like can be output in at least one of a direction from higher layers to lower layers and a direction from lower layers to higher layers. The information, signals, and the like may be input and output via a plurality of network nodes.

The information, signals, and the like that are input and/or output may be stored in a specific location (for example, in a memory), or may be managed with a management table. The information, signals, and the like to be input and/or output can be overwritten, updated, or appended. The information, signals, and the like that are output may be deleted. The information, signals, and the like that are input may be transmitted to other apparatuses.

Notification of information may be performed not only by using the aspects/embodiments described in the present disclosure but also by using another method. For example, notification of information in the present disclosure may be performed by using physical layer signaling (for example, downlink control information (DCI), uplink control information (UCI)), higher layer signaling (for example, radio resource control (RRC) signaling, broadcast information (master information block (MIB), system information block (SIB), or the like), medium access control (MAC) signaling), another signal, or a combination thereof.

Note that physical layer signaling may be referred to as Layer 1/Layer 2 (L1/L2) control information (L1/L2 control signals), L1 control information (L1 control signal), or the like. Further, the RRC signaling may be referred to as an RRC message, and may be, for example, an RRC connection setup message, an RRC connection reconfiguration message, or the like. Further, notification of the MAC signaling may be given by using, for example, a MAC control element (MAC control element (CE)).

Further, notification of given information (for example, notification of information to the effect that "X holds") is not limited to an explicit notification, and may be made implicitly (for example, by not making the given notification, or by notification of other information).

Judging may be made in values represented by one bit (0 or 1), may be made in Boolean values that represent true or false, or may be made by comparing numerical values (for example, comparison with a given value).

Regardless of being referred to as software, firmware, middleware, a microcode, or a hardware description language, or being referred to as another name, software should be interpreted broadly, to mean an instruction, an instruction set, a code, a code segment, a program code, a program, a subprogram, a software module, an application, a software application, a software package, a routine, a subroutine, an object, an executable file, an execution thread, a procedure, a function, and the like.

Further, the software, instruction, information, and the like may be transmitted and received via a transmission medium. For example, when software is transmitted from a website, a server, or another remote source by using at least one of a wired technology (coaxial cable, optical fiber cable, twisted-pair, digital subscriber line (DSL), or the like) and a radio technology (infrared rays, microwaves, or the like), at least one of the wired technology and the radio technology is included within a definition of the transmission medium.

The terms "system" and "network" used in the present disclosure can be used interchangeably. The "network" may mean an apparatus (for example, a base station) included in the network.

In the present disclosure, terms such as "precoding", "precoder", "weight (precoding weight)", "quasi-co-location (QCL)", "transmission configuration indication state (TCI state)", "spatial relation", "spatial domain filter", "transmit power", "phase rotation", "antenna port", "antenna port group", "layer", "number of layers", "rank", "resource", "resource set", "resource group", "beam", "beam width", "beam angle", "antenna", "antenna element", and "panel" can be interchangeably used.

In the present disclosure, terms such as "base station (BS)", "radio base station", "fixed station", "NodeB", "eNodeB (eNB)", "gNodeB (gNB)", "access point", "transmission point (TP)", "reception point (RP)", "transmission/reception point (TRP)", "panel", "cell", "sector", "cell group", "carrier", and "component carrier", can be used interchangeably. The base station may be referred to as a term such as a macro cell, a small cell, a femto cell, or a pico cell.

The base station can accommodate one or a plurality of (for example, three) cells. When the base station accommodates a plurality of cells, an entire coverage area of the base station can be partitioned into a plurality of smaller areas, and each smaller area can provide a communication service through a base station subsystem (for example, an indoor small base station (remote radio head (RRH))). The term "cell" or "sector" refers to a part or the whole of a coverage area of at least one of a base station and a base station subsystem that provide a communication service in this coverage.

In the present disclosure, the terms such as "mobile station (MS)", "user terminal", "user equipment (UE)", and "terminal" can be used interchangeably.

The mobile station may be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other appropriate terms.

At least one of the base station and the mobile station may be referred to as a transmission apparatus, a reception apparatus, a radio communication apparatus, or the like. Note that at least one of the base station and the mobile station may be a device mounted on a moving object, the moving object itself, or the like. The moving object may be a transportation (for example, a car, an airplane, or the like), may be an unmanned moving object (for example, a drone, an autonomous car, or the like), or may be a (manned or unmanned) robot. Note that at least one of the base station and the mobile station also includes an apparatus that does not necessarily move during a communication operation. For example, at least one of the base station and the mobile station may be an Internet of Things (IoT) device such as a sensor.

Further, the base station in the present disclosure may be replaced with the user terminal. For example, each aspect/embodiment of the present disclosure may be applied to a configuration in which communication between the base station and the user terminal is replaced with communication between a plurality of user terminals (which may be referred to as, for example, device-to-device (D2D), vehicle-to-everything (V2X), or the like). In this case, the user terminal 20 may have the function of the base station 10 described above. Further, terms such as "uplink" and "downlink" may be replaced with terms corresponding to communication between terminals (for example, "side"). For example, an uplink channel, a downlink channel, and the like may be replaced with a side channel.

Similarly, the user terminal in the present disclosure may be replaced with the base station. In this case, the base station 10 may have the function of the user terminal 20 described above.

In the present disclosure, the operation performed by the base station may be performed by an upper node thereof in some cases. In a network including one or a plurality of network nodes including the base station, it is clear that various operations performed for communication with the terminal can be performed by the base station, one or more network nodes (for example, a mobility management entity (MME), a serving-gateway (S-GW), and the like are conceivable, but not limited thereto) other than the base station, or a combination thereof.

Each aspect/embodiment described in the present disclosure may be used alone, used in combination, or switched in association with execution. Further, the order in a processing procedure, a sequence, a flowchart, and the like of the aspects/embodiments described in the present disclosure may be re-ordered as long as there is no inconsistency. For example, regarding the methods described in the present disclosure, elements of various steps are presented using an illustrative order, and are not limited to the presented specific order.

Each aspect/embodiment described in the present disclosure may be applied to a system using long term evolution (LTE), LTE-advanced (LTE-A), LTE-beyond (LTE-B), SUPER 3G, IMT-Advanced, 4th generation mobile communication system (4G), 5th generation mobile communication system (5G), future radio access (FRA), new radio access technology (RAT), new radio (NR), new radio access (NX), future generation radio access (FX), Global System for Mobile communications (GSM (registered trademark)), CDMA 2000, ultra mobile broadband (UMB), IEEE 802.11 (Wi-Fi (registered trademark)), IEEE 802.16 (WiMAX (registered trademark)), IEEE 802.20, ultra-wideband (UWB), Bluetooth (registered trademark), or another appropriate radio communication method, a next generation system extended on the basis of these, and the like. Further, a plurality of systems may be combined (for example, a combination of LTE or LTE-A and 5G) and applied.

The phrase "on the basis of" as used in the present disclosure does not mean "on the basis of only", unless otherwise specified. In other words, the phrase "on the basis of" means both "on the basis of only" and "on the basis of at least".

Any reference to an element using designations such as "first" and "second" used in the present disclosure does not generally limit the amount or order of these elements. These designations may be used in the present disclosure only for convenience as a method for distinguishing between two or more elements. Thus, reference to the first and second elements does not mean that only two elements are employed, or that the first element must precede the second element in some way.

The term "determining" used in the present disclosure may include a wide variety of operations. For example, "determining" may be regarded as "determining" of judging, calculating, computing, processing, deriving, investigating, looking up, search, inquiry (for example, looking up in a table, database, or another data structure), ascertaining, or the like.

Further, "determining" may be regarded as "determining" of receiving (for example, receiving information), transmitting (for example, transmitting information), inputting, outputting, accessing (for example, accessing data in a memory), and the like.

Further, "determining" may be regarded as "determining" of resolving, selecting, choosing, establishing, comparing, and the like. In other words, "determining" may be regarded as "determining" of some operation.

Further, "determining" may be replaced with "assuming", "expecting", "considering", and the like.

The "maximum transmit power" described in the present disclosure may mean a maximum value of transmit power, the nominal UE maximum transmit power, or the rated UE maximum transmit power.

As used in the present disclosure, the terms "connected" and "coupled", or any variation of these terms mean all direct or indirect connections or couplings between two or more elements, and may include the presence of one or more intermediate elements between two elements that are "connected" or "coupled" to each other. The coupling or connection between the elements may be physical, logical or a combination of these. For example, "connection" may be replaced with "access".

In the present disclosure, when two elements are connected to each other, it is conceivable that the elements are "connected" or "coupled" to each other by using one or more electrical wires, cables, printed electrical connections, and the like, and, as some non-limiting and non-inclusive examples, by using electromagnetic energy having wavelengths in the radio frequency, microwave, and optical (both visible and invisible) regions, or the like.

In the present disclosure, a term "A and B are different" may mean "A and B are different from each other". Note that the term may mean that "A and B are different from C". The terms such as "separated", "coupled", and the like may be interpreted as "different".

When the terms such as "include", "including", and variations of these are used in the present disclosure, these terms are intended to be inclusive, similarly to the term "comprising". Furthermore, the term "or" as used in the present disclosure is intended to be not an exclusive- OR.

In the present disclosure, for example, when translations add articles such as a, an, and the in English, the present disclosure may include that the noun that follows these articles is in the plural.

In the above, the invention according to the present disclosure has been described in detail; however, it is obvious to those skilled in the art that the invention according to the present disclosure is not limited to the embodiments described in the present disclosure. The invention according to the present disclosure can be embodied with various corrections and in various modified aspects, without departing from the spirit and scope of the invention defined on the basis of the description of claims. Thus, the description of the present disclosure is for the purpose of explaining examples and does not bring any limiting meaning to the invention according to the present disclosure.

## Claims

1. A user terminal comprising:
a reception section that receives instructions of a plurality of uplink signals using a plurality of panels; and
a control section that transmits one first uplink signal based on the plurality of uplink signals by using one first panel among the plurality of panels in a period when there is the period in which the plurality of uplink signals overlaps with each other in a case where transmission is not performed by using the plurality of panels simultaneously.

2. The user terminal according to claim 1, wherein the control section determines the first panel on a basis of types of the plurality of uplink signals, and determines at least one piece of processing of transmission, dropping, and multiplexing of one or more uplink signals on a basis of types of the one or more uplink signals using the first panel.

3. The user terminal according to claim 1, wherein the control section determines at least one piece of processing of transmission, dropping, and multiplexing of one or more uplink signals for each of the plurality of panels on a basis of types of one or more uplink signals using each of the plurality of panels, and determines the first panel on a basis of a type of an uplink signal to be transmitted by processing for each of the plurality of panels.

4. The user terminal according to any of claims 1 to 3, wherein when a second uplink signal using a second panel overlaps with the first uplink signal in the period, the control section drops the second uplink signal or multiplexes information included in the second uplink signal to the first uplink signal in any of a symbol including the period, a guard period and the symbol including the period, a slot including the period, and a time resource of the second uplink signal.

5. The user terminal according to any of claims 1 to 4, wherein a case where transmission using the plurality of panels is not performed simultaneously is a case where supporting transmission using the plurality of panels simultaneously is not reported, or a case where performing transmission using the plurality of panels simultaneously is not set.

6. A radio communication method for a user terminal, comprising:
receiving instructions of a plurality of uplink signals using a plurality of panels; and
transmitting one first uplink signal based on the plurality of uplink signals by using one first panel among the plurality of panels in a period when there is the period in which the plurality of uplink signals overlaps with each other in a case where transmission is not performed by using the plurality of panels simultaneously.
